# EUROPEAN PATENT APPLICATION

(11) **EP 2 466 888 A1**
(43) Date of publication of application: **20.06.2012**
(21) Application number: 10808060.7
(22) Date of filing: 14.06.2010
(51) Int. Cl.: H04N 7/173, G06F 13/00

(54) **CONTENT DELIVERY SYSTEM**

(30) Priority: 10.08.2009 JP 2009186119
(71) Applicant: NEC Corporation, Tokyo 108-8001 (JP)
(72) Inventor: NOGAMI, Kousuke, Tokyo 108-8001 (JP); TANIGUCHI, Kunihiro, Tokyo 108-8001 (JP); ISHIKAWA, Kazushige, Tokyo 108-8001 (JP)
(74) Representative: Robson, Aidan John
(86) International application number: PCT/JP2010/003916
(87) International publication number: WO 2011/018872

(57) **Abstract**

A content delivery system 1 is equipped with: a maximum communication bandwidth acquisition part 101 configured to acquire a maximum value of a communication bandwidth necessary for transmitting content data identified by content identification information included in playlist information including plural pieces of content identification information for identifying content, as a maximum communication bandwidth; a connection establishment part 102 configured to establish a connection having the acquired maximum communication bandwidth between an application server system and user equipment; and a content transmission part 103 configured to transmit the content data identified by the content identification information included in the playlist information by using the established connection from the application server system to the user equipment.

## Description

### TECHNICAL FIELD

The present invention relates to a content delivery system that transmits content data showing content to user equipment.

### BACKGROUND ART

A content delivery system including a content transmission device, a content reception device and a connection control device (an SIP (Session Initiation Protocol) server) is known.

In a content delivery system described in Patent Document 1 as one of content delivery systems of this type, a content reception device transmits a content transmission request to a connection control device. In response to the content transmission request, the connection control device transmits a content transmission instruction to a content transmission device, and establishes a connection (a session) having a predetermined communication bandwidth between the content transmission device and the content reception device.

Then, when a connection is established by the connection control device, the content transmission device transmits content data specified by the content transmission request to the content reception device by using the connection.

According to this content delivery system, because a communication bandwidth in a communication path between the content transmission device and the content reception device is previously secured, it is possible to prevent that communication quality is lowered when content data is transmitted from the content transmission device to the content reception device (e.g., prevent that reproduction of content by the content reception device is interrupted).

[Patent Document 1] Japanese Unexamined Patent Application Publication No. 2008-153896

There is a case that the content transmission device transmits plural content data to the content reception device by using one established connection. In this case, a communication bandwidth necessary for transmitting each of the content data may vary.

In such a situation, for example, in a case that the content delivery system is configured to establish a connection having a communication bandwidth necessary for transmitting content data to be first transmitted, there is a fear that when a communication bandwidth necessary for transmitting content data (following content data) to be transmitted after the content data to be first transmitted (first content data) is larger than that for transmitting the first content data, communication quality is lowered when the following content data is transmitted.

### SUMMARY

Accordingly, an object of the present invention is to provide a content delivery system capable of solving the aforementioned problem, "communication quality is lowered when plural content data are transmitted."

In order to achieve the object, a content delivery system as an exemplary embodiment of the present invention includes an application server system and a connection control system, and is equipped with:
a maximum communication bandwidth acquiring means for acquiring a maximum value of a communication bandwidth necessary for transmitting content data identified by content identification information included in playlist information including plural pieces of content identification information for identifying content, as a maximum communication bandwidth;
a connection establishing means for establishing a connection having the acquired maximum communication bandwidth between the application server system and user equipment; and
a content transmitting means for transmitting the content data identified by the content identification information included in the playlist information by using the established connection from the application server system to the user equipment.

Further, a content delivery system of another exemplary embodiment of the present invention includes an application server system and a connection control system.

Furthermore, the connection control system includes:
a Core IMS (Internet Protocol Multimedia Subsystem) part configured to control a connection between the application server system and user equipment; and
a transport functions part configured to execute a band securing process of securing a communication band of a predetermined communication bandwidth in a communication path between the application server system and the user equipment.

In addition, the application server system includes:
a media functions part configured to transmit content data showing content to the user equipment; and
a service control functions part configured to control a service provided by the media functions part.

Furthermore, the media functions part includes a maximum communication bandwidth acquiring means for acquiring a maximum value of a communication bandwidth necessary for transmitting content data identified by content identification information included in playlist information including plural pieces of content identification information for identifying content, as a maximum communication bandwidth.

In addition, the Core IMS part and the transport functions part include a connection establishing means for establishing a connection that is via the Core IMS part between the application server system and the user equipment and that has the acquired maximum communication bandwidth.

In addition, the media functions part further includes a content transmitting means for transmitting content data identified by the content identification information included in the playlist information by using the established connection to the user equipment.

Further, a content delivery method of another exemplary embodiment of the present invention is a method of transmitting content data showing content from an application server system to user equipment via a connection control system.

Furthermore, this content delivery method is a method including:
acquiring a maximum value of a communication bandwidth necessary for transmitting content data identified by content identification information included in playlist information including plural pieces of content identification information for identifying content, as a maximum communication bandwidth;
establishing a connection having the acquired maximum communication bandwidth between the application server system and the user equipment; and
transmitting the content data identified by the content identification information included in the playlist information by using the established connection to the user equipment, by the application server system.

Further, a media server of another exemplary embodiment of the present invention includes:
a maximum communication bandwidth acquiring means for acquiring a maximum value of a communication bandwidth necessary for transmitting content data identified by content identification information included in playlist information including plural pieces of content identification information for identifying content, as a maximum communication bandwidth; and
a content transmitting means for transmitting the content data identified by the content identification information included in the playlist information to user equipment by using a connection established based on the acquired maximum communication bandwidth.

Further, a program of another exemplary embodiment of the present invention is a program for causing a media server to realize:
a maximum communication bandwidth acquiring means for acquiring a maximum value of a communication bandwidth necessary for transmitting content data identified by content identification information included in playlist information including plural pieces of content identification information for identifying content, as a maximum communication bandwidth; and
a content transmitting means for transmitting the content data identified by the content identification information included in the playlist information to user equipment by using a connection established based on the acquired maximum communication bandwidth.

Further, a service control server of another exemplary embodiment of the present invention includes:
a content request receiving means for receiving a content transmission request including content identification information for identifying content from user equipment;
a playlist information generating means for generating playlist information by adding other content identification information to the content identification information included in the received content transmission request; and
a playlist information transmitting means for transmitting the generated playlist information to a media server.

Further, a program of another exemplary embodiment of the present invention is a program for causing a service control server to realize:
a content request receiving means for receiving a content transmission request including content identification information for identifying content from user equipment;
a playlist information generating means for generating playlist information by adding other content identification information to the content identification information included in the received content transmission request; and
a playlist information transmitting means for transmitting the generated playlist information to a media server.

With the configurations described above, the present invention can prevent that communication quality is lowered when plural content data are transmitted.

### BRIEF DESCRIPTION OF DRAWINGS

Fig. 1 is a diagram showing a schematic configuration of a content delivery system according to a first exemplary embodiment of the present invention;
Fig. 2 is a block diagram showing the outline of a function of the content delivery system shown in Fig. 1;
Fig. 3 is a table showing content identification information and code rates stored in a media server shown in Fig. 1;
Fig. 4 is a sequence diagram showing an operation when the content delivery system shown in Fig. 1 authenticates user equipment and the user of the user equipment;
Fig. 5 is a sequence diagram showing an operation when the content delivery system shown in Fig. 1 establishes a connection between the user equipment and the media server;
Fig. 6 is a sequence diagram showing an operation when the content delivery system shown in Fig. 1 transmits viewing content data to the user equipment;
Fig. 7 is a view showing an INVITE message including a content transmission request, transmitted from the user equipment to a connection control system and a service control server;
Fig. 8 is a view showing an INVITE message including a content transmission instruction, transmitted from the service control server to the media server;
Fig. 9 is a view showing an OK message including a transmission permission notice, transmitted from the media server to the service control server;
Fig. 10 is a view showing an INVITE message including a content transmission instruction according to a modified example of the first exemplary embodiment;
Fig. 11 is a view showing an INVITE message including a content transmission instruction according to a modified example of the first exemplary embodiment;
Fig. 12 is a view showing an INVITE message including a content transmission instruction according to a modified example of the first exemplary embodiment;
Fig. 13 is a view showing an INVITE message including a content transmission instruction according to a modified example of the first exemplary embodiment;
Fig. 14 is a sequence diagram showing an operation when a content delivery system according to a second exemplary embodiment of the present invention reacquires a maximum communication bandwidth based on playlist information after changed and reestablishes a connection having the newly acquired maximum communication bandwidth;
Fig. 15 is a diagram showing a schematic configuration of a content delivery system according to a third exemplary embodiment of the present invention;
Fig. 16 is a sequence diagram showing an operation when the content delivery system shown in Fig. 15 has received an equipment change request;
Fig. 17 is a sequence diagram showing an operation when the content delivery system shown in Fig. 15 changes playlist information in accordance with the attribute of the user equipment and establishes a connection having a maximum communication bandwidth acquired based on the playlist information after changed;
Fig. 18 is a block diagram showing the outline of a function of a content delivery system according to a fourth exemplary embodiment of the present invention; and
Fig. 19 is a block diagram showing the outline of a function of a content delivery system according to a fifth exemplary embodiment of the present invention.

### EXEMPLARY EMBODIMENTS

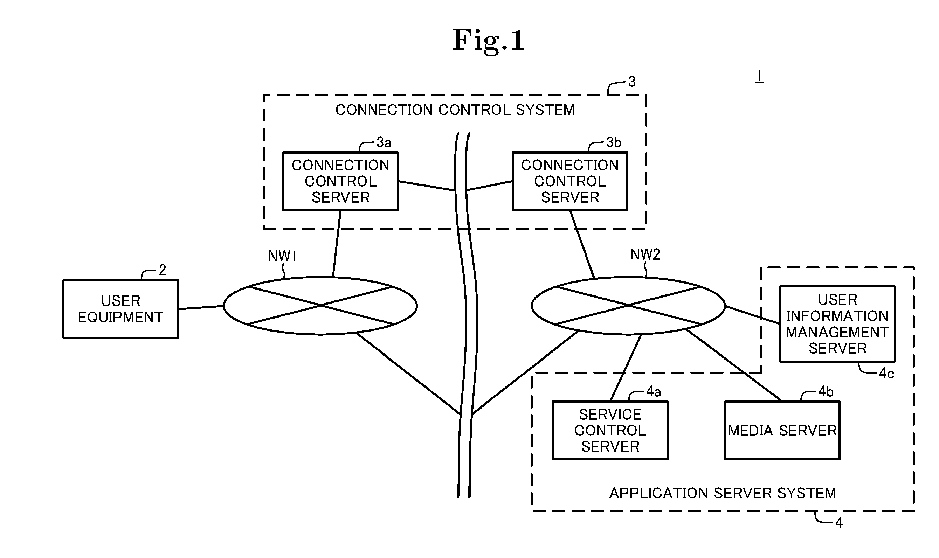

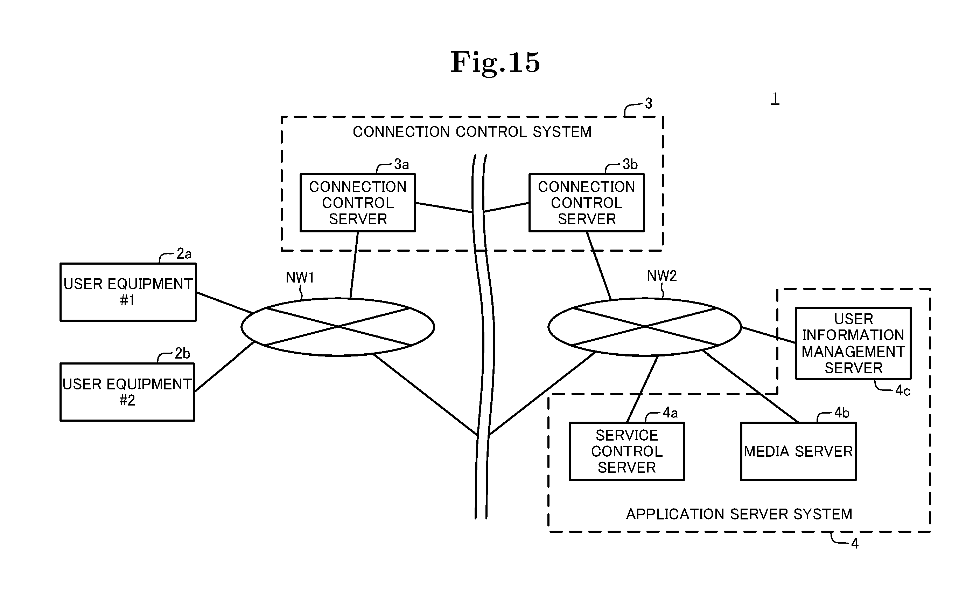

Exemplary embodiments of a content delivery system, a content delivery method, a media server, a program and a service control server according to the present invention will be described below with reference to Figs. 1 to 19.

### <First Exemplary Embodiment>

### (Configuration)

As shown in Fig. 1, a content delivery system 1 according to a first exemplary embodiment is a Video on Demand system. The content delivery system 1 may be an IPTV (Internet Protocol Television) system (e.g., a BC (BroadCast) system that broadcasts content, an nPVR (network Personal Video Recorder) system that performs unicast delivery of previously recorded broadcast content, or the like) other than a VoD system.

The content delivery system 1 includes a connection control system 3 and an application server system 4. The connection control system 3 includes a plurality of servers including a connection control server 3a and a connection control server 3b. The application server system 4 includes a plurality of servers including a service control server 4a, a media server 4b and a user information management server 4c.

The connection control server 3a is connected to user equipment (UE) 2 so as to be capable of communicating via a user-side communication line NW1 configuring an IP (Internet Protocol) network. The connection control server 3b and the application server system 4 are connected so as to be capable of communicating with each other via a service-provider-side communication line NW2 configuring the IP network.

The user equipment 2 is equipped with a set top box and a remote controller, which are not shown in the drawing. The set top box is connected to a television set not shown in the drawing. The set top box receives content data showing content (in this exemplary embodiment, a moving image including sounds and images) transmitted from the media server 4b, and converts the received content data to cause the television set to output the content.

The remote controller has a plurality of buttons (button-type switches). When the button is pressed by the user, the remote controller transmits a radio (in this exemplary embodiment, infrared) signal corresponding to the button to the set top box. The set top box receives the radio signal from the remote controller, thereby accepting information inputted by the user.

Further, the user equipment 2 makes a memory serving as a storage device store equipment specification information that is information for specifying the equipment (the own equipment).

The connection control server 3a, the connection control server 3b, the service control server 4a, the media server 4b and the user information management server 4c (the servers 3a to 4c) are each equipped with a central processing unit (CPU) and a storage device (a memory and a hard disk drive (HDD)), which are not shown in the drawing. The servers 3a to 4c are each configured to realize a function described later by the CPU's execution of a program stored in the storage device.

The connection control server 3a and the connection control server 3b are each configured to receive and transmit a connection establishing message for establishing a connection and thereby control a connection between plural devices. In this exemplary embodiment, a connection establishing message is a message (an SIP message) according to SIP (Session Initiation Protocol). Each of the connection control server 3a and the connection control server 3b is also referred to an SIP server.

By transmitting and receiving SIP messages to and from the user equipment 2 and the application server system 4, respectively, the connection control system 3 establishes a connection (a session) having a predetermined communication bandwidth between the application server system 4 and the user equipment 2. A communication bandwidth represents the amount of data transmitted per unit time.

The service control server 4a controls a service (a service of transmitting content data) provided by the media server 4b. The media server 4b transmits content data showing content to the user equipment 2 that a connection has been established by the connection control system 3. The user information management server 4c previously stores profile information of the user of the user equipment 2, and transmits the stored profile information to the service control server 4a.

### (Function)

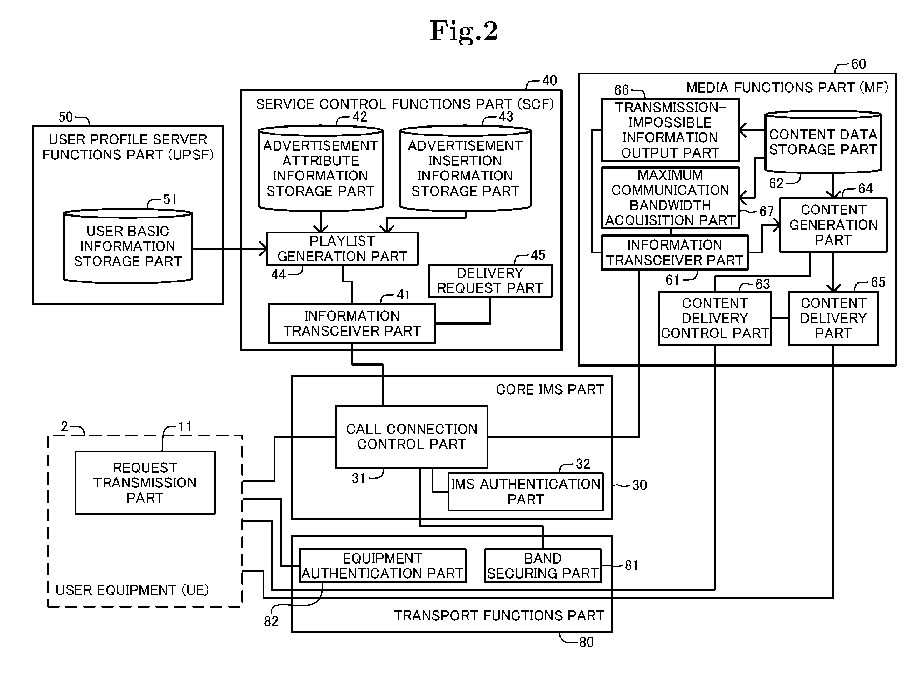

Fig. 2 is a block diagram showing a function of the content delivery system 1 configured as described above.

### (Function: User Equipment)

A function of the user equipment 2 includes a request transmission part (a content request transmitting means) 11. When the power supply switch of the user equipment 2 is set to the on state (i.e., when electric power is supplied), the request transmission part 11 transmits an SIP message as an equipment authentication process request including stored equipment specification information, to the connection control server 3a.

Further, the request transmission part 11 receives an SIP message including equipment authentication success information from the connection control system 3. Equipment authentication success information is information which includes equipment address information showing a position on the IP network and which shows the user equipment 2 in the position shown by the equipment address information is authenticated as valid equipment.

Furthermore, the request transmission part 11 transmits an SIP message including user authenticating information inputted via the remote controller by the user UA of the user equipment 2 to the connection control system 3. In this exemplary embodiment, user authenticating information includes user identification information representing string for identifying the user of the user equipment 2 and password information representing string as a password.

Further, the request transmission part 11 receives an SIP message including user authentication success information from the connection control system 3. User authentication success information is information which includes user identification information and which shows the user identified by the user identification information (i.e., the user having inputted user authenticating information) is authenticated as a valid user.

When receiving user authentication success information from the connection control system 3, the request transmission part 11 transmits an SIP message including a process request of requesting execution of a process on the application server system to the connection control system 3, in response to a request transmission instruction inputted by the user of the user equipment 2. The process request includes the user authentication success information (i.e., the user identification information).

For example, the request transmission part 11 transmits a content transmission request as the process request to the service control server 4a via the connection control system 3. A content transmission request is information including user authentication success information (i.e., user identification information), equipment address information and main content identification information. Main content identification information is information for identifying content (main content) which the user of the user equipment 2 wishes to view.

### (Function: Connection Control System)

Afunction of the connection control system 3 includes a Core IMS (Internet Protocol Multimedia Subsystem) part 30 and a transport function (TF) part 80. The Core IMS part 30 and the transport functions part 80 configure a connection establishing means.

The Core IMS part 30 includes a call connection control part 31 and an IMS authentication part 32. Moreover, the transport functions part 80 includes a band securing part 81 and an equipment authentication part 82.

The call connection control part 31 controls a connection between plural devices by transmitting and receiving SIP messages.

Further, when the connection control server 3a receives an equipment authentication process request from the user equipment 2, the equipment authentication part 82 determines whether equipment specification information included in the received equipment authentication process request corresponds to (in this exemplary embodiment, coincides with) equipment authenticating reference information, thereby authenticating the validity of the user equipment 2 (i.e., executing an equipment authentication process).

Herein, equipment authenticating reference information is information which is previously stored by a storage device of the connection control server 3a. The equipment authenticating reference information may be stored by a storage device (a user profile server functions part 50 described later) of the user information management server 4c.

In a case that the user equipment 2 is authenticated as valid equipment, the equipment authentication part 82 transmits an SIP message including equipment authentication success information to the user equipment 2.
Further, when the user equipment 2 is authenticated as valid equipment by the equipment authentication part 82, the call connection control part 31 thereafter executes a process (e.g., a process of transferring a message to the application server system 4) based on a message (e.g., a process request) transmitted from the user equipment 2.

On the other hand, when the user equipment 2 is not authenticated as valid equipment by the equipment authentication part 82, the call connection control part 31 does not thereafter execute a process based on a message (e.g., a process request) transmitted from the user equipment 2.

Furthermore, in a case that the connection control server 3a receives a user authentication process request from the user equipment 2, the IMS authentication part 32 determines whether user authenticating information included in the user authentication process request corresponds to user identifying reference information. Thus, the IMS authentication part 32 authenticates the validity of the user having inputted the user authenticating information, i.e., the user identified by user identification information included in the user authenticating information (authenticates the coincidence of the user identified by the user identification information with the user of the user equipment 2; i.e., executes a user authentication process).

Herein, user authenticating reference information is information which is previously stored by the storage device (the user profile server functions part 50 described later) of the user information management server 4c.

Then, in a case that the user having inputted the user authenticating information is authenticated as a valid user by the IMS authentication part 32, the call connection control part 31 transmits an SIP message including user authentication success information to the user equipment 2. On the other hand, in a case that the user having inputted the user authenticating information is not authenticated as a valid user by the IMS authentication part 32, the call connection control part 31 does not transmit the SIP message including the user authentication success information to the user equipment 2.

Furthermore, when receiving a band securing instruction from the service control server 4a, the call connection control part 31 establishes a connection between the media server 4b and the user equipment 2 based on the received band securing instruction. The band securing instruction includes media delivery specification information for specifying the media server 4b and maximum communication bandwidth information showing a maximum communication bandwidth.

To be specific, the call connection control part 31 transmits and receives SIP messages to and from the media server 4b specified by the received media delivery specification information and the user equipment 2, respectively. Moreover, the call connection control part 31 transmits the received maximum communication bandwidth information and communication path specification information that specifies a communication path between the media server 4b specified by the received media delivery specification information and the user equipment 2, to the transport functions part 80.

The band securing part 81 receives the maximum communication bandwidth information and the communication path specification information from the call connection control part 31, and executes a process (a band securing process) for securing a communication band having the maximum communication bandwidth shown by the received maximum communication bandwidth information, in the communication path specified by the received communication path specification information.

Thus, the Core IMS part 30 and the transport functions part 80 establish a connection that is between the application server system 4 and the user equipment 2 via the Core IMS part 30 and that has the maximum communication bandwidth shown by the maximum communication bandwidth information.

Further, as described above, it can be said that the Core IMS part 30 receives equipment specification information from the user equipment 2 and establishes a connection between the application server system 4 and the user equipment 2 based on the received equipment specification information.

### (Function: User Information Management Server)

On the other hand, a function of the user information management server 4c includes a user profile server functions part (UPSF) 50.
The user profile server functions part 50 stores profile information of the user of the user equipment 2. The user profile server functions part 50 includes a user basic information storage part 51.

The user basic information storage part 51 stores user basic information in relation to user identification information for identifying the user of the user equipment 2. The user basic information includes user attribute information showing the attribute of the user (e.g., the residential place, age, gender, height, weight, job and/or the like of the user), and equipment attribute information showing the attribute of the user equipment (e.g., the resolution of a display, a processing capability, a storage capacity, a maximum communication speed and/or the like).

Further, the attribute of the user may include the preference of the user.

### (Function: Service Control Server)

On the other hand, a function of the service control server 4a includes a service control functions part 40.

The service control functions part 40 includes an information transceiver part (a content request receiving means, a playlist information transmitting means) 41, an advertisement attribute information storage part 42, an advertisement insertion information storage part 43, a playlist generation part (a playlist information generating means) 44, and a delivery request part 45.

The information transceiver part 41 receives various kinds of information transmitted by the user equipment 2 or the media server 4b via the Core IMS part 30 (through the Core IMS part 30). For example, the information transceiver part 41 receives a content transmission request transmitted by the user equipment 2 via the Core IMS part 30.

Further, the information transceiver part 41 transmits various kinds of information to the user equipment 2 or the media server 4b via the Core IMS part 30. In this embodiment, various kinds of information are included in an SIP message.

Only when receiving a process request including user authentication success information from the user equipment 2, the service control server 4a executes a process based on the process request. That is to say, when the user having inputted user authenticating information is authenticated as a valid user by the IMS authentication part 32, the application server system 4 executes a process based on a process request.

The advertisement attribute information storage part 42 stores advertisement content identification information for identifying advertisement content.
The advertisement insertion information storage part 43 stores main content identification information, insertion number information and insertion position information in relation to each other.

Insertion number information is information showing an insertion number that is the number of advertisement contents inserted in main content. Insertion position information is information showing an insertion position that is a position which is within the main content and which advertisement content is inserted in (in this exemplary embodiment, a reproduction time of main content from the beginning).

The playlist generation part 44 accepts a content transmission request as a process request received by the information transceiver part 41. A content transmission request is information which is transmitted by the user equipment 2 and which includes user authentication success information (i.e., user identification information), equipment address information and main content identification information.

The playlist generation part 44 acquires insertion number information and insertion position information stored in relation to the main content identification information included in the content transmission request, among the insertion number information and the insertion position information stored by the advertisement insertion information storage part 43.

Then, the playlist generation part 44 selects advertisement content identification information by a number shown by the acquired insertion number information, from among the advertisement content identification information stored by the advertisement attribute information storage part 42.

The playlist generation part 44 may be configured to select advertisement content identification information based on user basic information related to the user identification information for identifying the user of the user equipment 2 having transmitted the content transmission request. Moreover, the playlist generation part 44 may be configured to select advertisement content identification information based on information showing the attribute of content (e.g., the genre of content) identified by the main content identification information included in the content transmission request.

Further, the service control functions part 40 may be configured to previously store advertisement content identification information in relation to main content identification information. In this case, the playlist generation part 44 is configured to select advertisement content identification information stored in relation to the main content identification information included in the content transmission request.

Next, the playlist generation part 44 generates playlist information based on the selected advertisement content identification information (selected advertisement content specification information for specifying selected advertisement content data), the main content identification information included in the content transmission request, and the acquired insertion position information.

In this exemplary embodiment, the playlist information includes plural pieces of content element information each including a combination of content identification information for identifying content and a reproduction starting position and reproduction time of the content identified by the content identification information. Herein, the content identification information is advertisement content identification information for identifying main content identification information for identifying main content or advertisement content identification information for identifying advertisement content. Moreover, the content element information may include a reproduction end position instead of the reproduction time.

In this exemplary embodiment, as described later, the media server 4b transmits the content data identified by the content identification information included in the playlist information, in accordance with an arrangement order of the content identification information in the playlist information. Then, when receiving the content data, the user equipment 2 outputs the received content data in accordance with a reception order. That is to say, the playlist information includes information showing the order of output of the content (an output order of content).

Thus, the playlist generation part 44 adds other content identification information (in this exemplary embodiment, the advertisement content identification information) to the content identification information (in this exemplary embodiment, the main content identification information) included in the content transmission request received by the information transceiver part 41, thereby generating playlist information.

Furthermore, the playlist generation part 44 relates the generated playlist information to the user identification information, and stores until transmission of the content data from the media server 4b to the user equipment 2 based on the playlist information is completed.

The delivery request part 45 outputs a content transmission instruction. A content transmission instruction includes the playlist information generated by the playlist generation part 44, the user authentication success information included in the content transmission request (i.e., the user identification information), the main content identification information, and the equipment address information.

The information transceiver par 41 transmits the content transmission instruction outputted by the delivery request part 45 to the media server 4b via the Core IMS part 30. Moreover, the information transceiver part 41 receives a transmission permission notice transmitted by the media server 4b in response to the content transmission instruction. The transmission permission notice includes media delivery specification information for specifying a media server (in this exemplary embodiment, the media server 4b), and the maximum communication bandwidth information representing a maximum communication bandwidth. When receiving the transmission permission notice, the information transceiver 41 transmits a band securing instruction to the Core IMS part 30

### (Function: Media Server)

A function of the media server 4b includes a media functions (MF) part 60. The media functions part 60 includes a media control functions (MCF) part, and a media delivery functions (MDF) part.

The media functions part 60 includes an information transceiver part (a playlist information receiving means, a maximum communication bandwidth information transmitting means) 61, a content data storage part (a code rate storing means) 62, a content delivery control part 63, a content generation part 64, a content delivery part (a content transmitting means) 65, a transmission-impossible information output part (a transmission-impossible information outputting means) 66, and a maximum communication bandwidth acquisition part (a maximum communication bandwidth acquiring means) 67.

The information transceiver part 61 receives various kinds of information transmitted from the service control server 4a via the Core IMS part 30. To be specific, the information transceiver part 61 receives a content transmission instruction (i.e., playlist information) and the like transmitted from the service control server 4a via the Core IMS part 30.

In this embodiment, when a content transmission instruction is received by the information transceiver part 60, the media functions part 60 stores playlist information included in the content transmission instruction in relation to user identification information and main content identification information included in the content transmission instruction.

The media functions part 60 may be configured to store playlist information in relation to message identification information. Message identification information is information that is for identifying a content transmission instruction (i.e., a content transmission request) as a message and that is included in the content transmission instruction. For example, message identification information is the value of the header "Call-ID" of a message. Moreover, the media functions part 60 may be configured to store playlist information in relation to main content identification information, user identification information, message identification information, or a combination thereof.

Further, the information transceiver part 61 transmits various kinds of information to the service control server 4a via the Core IMS part 30. To be specific, the information transceiver part 61 transmits a transmission permission notice and the like to the service control server 4a via the Core IMS part 30.

A transmission permission notice includes media delivery specification information for specifying a media server (in this exemplary embodiment, the media server 4b) and maximum communication bandwidth information representing a maximum communication bandwidth acquired by the maximum communication bandwidth acquisition part 67 as described later.

The content data storage part 62 stores main content data showing main content and main content identification information for identifying the main content in relation to each other. Moreover, the content data storage part 62 stores advertisement content data showing advertisement content and advertisement content identification information for identifying the advertisement content in relation to each other.

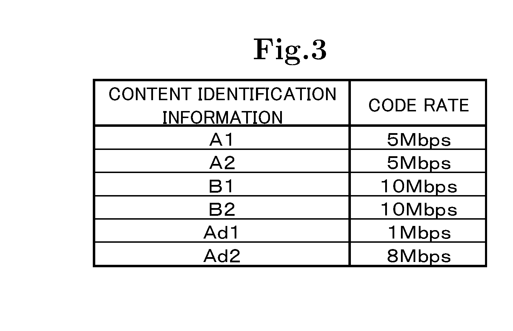

Furthermore, the content data storage part 62 stores content identification information (main content identification information or advertisement content identification information) and a code rate in relation to each other as shown in Fig. 3. A code rate is the amount of data for, based on content data identified by content identification information, reproducing content shown by the content data for a unit time.

When a content transmission instruction is received by the information transceiver part 61, the transmission-impossible information output part 66 determines whether it is possible to transmit content data identified by content identification information included in playlist information included in the content transmission instruction.

Then, in the case of determining it is impossible to the content data identified by the content identification information included in the playlist information, the transmission-impossible information output part 66 outputs transmission-impossible information showing it (i.e., it is impossible to transmit the content data).

In this exemplary embodiment, the transmission-impossible information output part 66 is configured to, for example, in a case that content data identified by content identification information is not stored by the content data storage part 62, or in a case that the process load of the media server 4b is excessive (i.e., larger than a predetermined threshold), determine it is impossible to transmit the content data.

In a case that the transmission-impossible information output part 66 outputs transmission-impossible information, the information transceiver part 61 transmits the transmission-impossible information to the service control server 4a via the Core IMS part 30.

In a case that a content transmission instruction is received by the information transceiver part 61, the maximum communication bandwidth acquisition part 67 acquires content identification information included in playlist information included in the content transmission instruction.

Next, the maximum communication bandwidth acquisition part 67 acquires a code rate stored in the content data storage part 62 in relation to the acquired content identification information, as a communication bandwidth necessary for transmitting content data identified by the content identification information. Then, the maximum communication bandwidth acquisition part 67 acquires the maximum value of the acquired communication bandwidth, as a maximum communication bandwidth.

The maximum communication bandwidth acquisition part 67 may be configured to acquire a value obtained by adding a predetermined communication bandwidth (e.g., a communication bandwidth necessary for controlling communication) to the maximum value of the acquired communication bandwidth as a maximum communication bandwidth.

Thus, the maximum communication bandwidth acquisition part 67 acquires the maximum value of a communication bandwidth necessary for transmitting content data identified by content identification information included in playlist information, as a maximum communication bandwidth.

The content delivery control part 63 receives a content viewing request from the user equipment 2. The content viewing request includes main content identification information and user identification information. Moreover, the content delivery control part 63 receives a reproduction start request from the user equipment 2. A reproduction start request is information showing a request for starting transmission of content data.

The content generation part 64 acquires playlist information included in a content transmission instruction including the user identification information and the main content identification information included in the content viewing request received by the content delivery control part 63, among content transmission instructions received by the information transceiver part 61.

Then, the content generation part 64 generates viewing content data based on the acquired playlist information and advertisement content data and main content data stored by the content data storage part 62.

To be specific, the content generation part 64 extracts, of content data (main content data or advertisement content data) stored by the content data storage part 62 in relation to content identification information configuring content element information included in the acquired playlist information, a portion from a reproduction start position configuring the content element information to a position in which a reproduction time configuring the content element information passes, as content element data on the basis of each content element information.

Then, the content generation part 64 generates viewing content data by connecting the extracted content element data in the order of arrangement of the content element information (i.e., the content identification information) in the playlist information. That is to say, the content generation part 64 generates viewing content data based on main content data and advertisement content data specified by the playlist information. That is to say, viewing content data includes plural content data.

Thus, the content generation part 64 can generate viewing content data showing viewing content in which advertisement content is inserted in main content. Consequently, the application server system 4 can transmit data showing content in which advertisement content is inserted in content that the user wishes to view (wish-to-view content, main content), to the user equipment 2. As a result, it is possible to have the user view content in which other content is inserted in wish-to-view content.

When a reproduction start request is received by the content delivery control part 63, the content delivery part 65 transmits viewing content data generated by the content generation part 64 to the user equipment 2. That is to say, the content delivery part 65 transmits content data in the order shown by playlist information.

At this moment, the content delivery part 65 transmits data in accordance with a predetermined communication protocol (in this exemplary embodiment, RTP (Real-time Transport Protocol)) by using a connection (a session) established by the Core IMS part 30.

That is to say, by using a connection between the user equipment 2 having transmitted a content transmission request and the media server 4b, established by the connection control system 3, the content delivery part 65 transmits content data identified by content identification information included in playlist information to the user equipment 2.

### (Operation)

Next, an operation of the abovementioned content delivery system 1 will be specifically described.

### (Operation: Authentication Process)

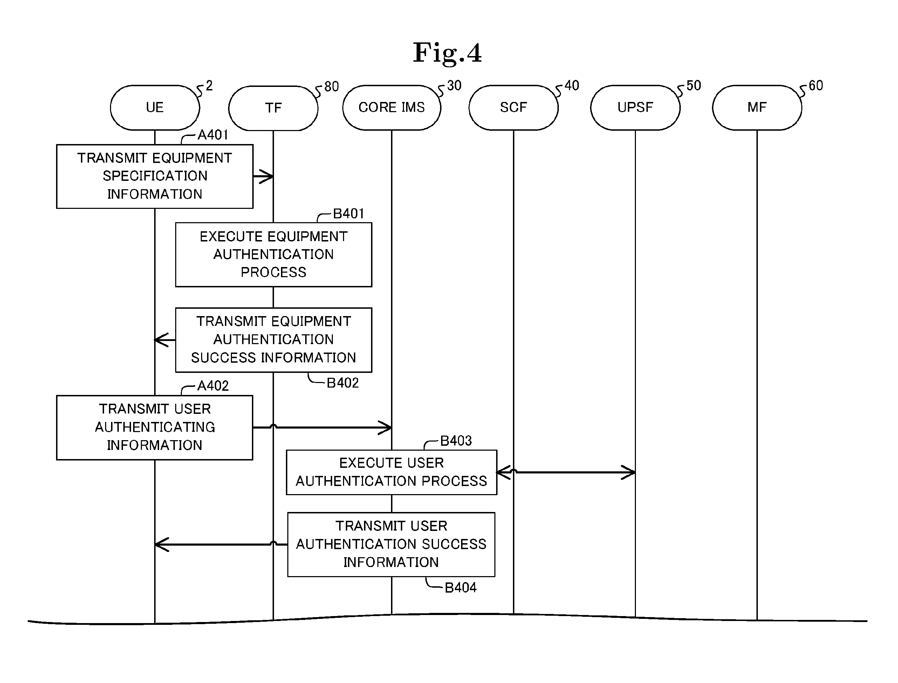

An operation of the content delivery system 1 when the content delivery system 1 authenticates the user of the user equipment 2 will be described with reference to a sequence diagram of Fig. 4.

At first, when the user sets the power switch of the user equipment 2 to the on state, electric power is thereby supplied to the user equipment 2. Thus, the user equipment 2 transmits an equipment authentication process request including stored equipment specification information to the connection control server 3a (the transport functions part 80) (step A401).

The transport functions part 80 determines whether the equipment specification information included in the received equipment authentication process request corresponds to (in this exemplary embodiment, coincides with) previously stored equipment authenticating reference information, thereby authenticating the validity of the user equipment 2 (i.e., executing an equipment authentication process) (step B401).

Then, in the case of authenticating the validity of the user equipment 2, the transport functions part 80 transmits equipment authentication success information to the user equipment 2 (step B402). Equipment authentication success information is information including equipment address information and showing that the user equipment 2 is authenticated as valid equipment.

Upon reception of the equipment authentication success information, the user equipment 2 causes the not-shown television set to display an image that prompts the user UA to input user authenticating information. Consequently, the user UA operates the remote controller to input the user authenticating information.

Then, upon acceptance of input of the user authenticating information, the user equipment 2 transmits a user authentication process request including the accepted user authenticating information to the Core IMS part 30 (step A402).

Thus, the Core IMS part 30 receives the user authentication process request. The Core IMS part 30 determines whether the user authenticating information included in the received user authentication process request corresponds to (in this exemplary embodiment, coincides with) previously stored user authenticating reference information. Thus, the Core IMS part 30 authenticates the validity of the user identified by user identification information included in the user authenticating reference information (i.e., the user having inputted the user authenticating information) (i.e., executes a user authentication process) (step B403).

Then, in the case of authenticating the validity of the user having inputted the user authenticating information, the Core IMS part 30 transmits user authentication success information to the user equipment 2 (step B404).

Thus, the user equipment 2 receives the user authentication success information. Then, after that, the user equipment 2 transmits (an SIP message including) a process request including the user authentication success information to the Core IMS part 30.

### (Operation: Content Viewing Process)

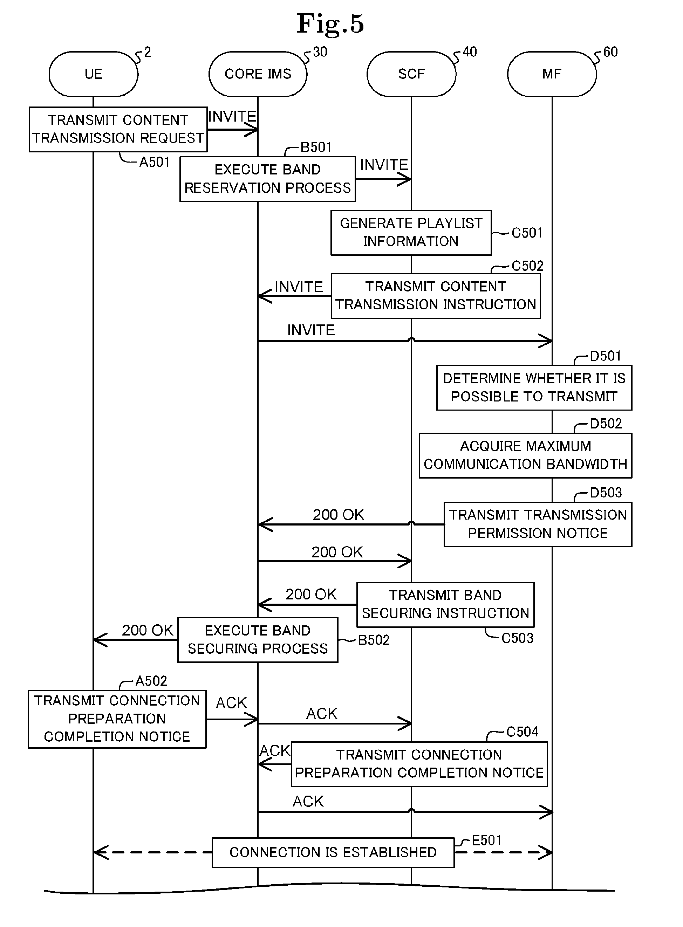

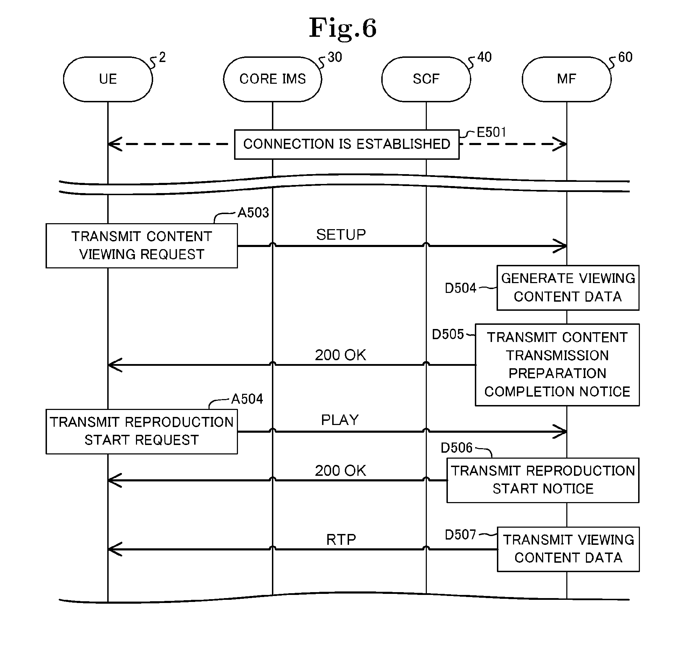

Next, an operation of the content delivery system 1 when the content delivery system 1 transmits content data to the user equipment 2 in response to input by the user UA of the user equipment 2 will be described with reference to sequence diagrams of Figs. 5 and 6.

At first, the user UA of the user equipment 2 inputs information of an instruction to transmit a process request of requesting transmission of content list information showing the list of available content, to the user equipment 2. Thus, the user equipment 2 transmits the process request to the service control server 4a (the service control functions part 40) via the Core IMS part 30.

Then, the service control functions part 40 transmits content list information showing the list of main content shown by main content data stored by the content data storage part 62 to the user equipment 2 via the Core IMS part 30. The content list information includes content identification information and a code rate related to the main content identification information. Upon reception of the content list information, the user equipment 2 causes the not-shown television set to display the list of the main content shown by the received content list information.

The content delivery system 1 may be configured so that content list information is transmitted to the user equipment 2 from a not-shown portal server configured to be capable of communicating with the user equipment 2 by HTTP (Hypertext Transfer Protocol).

In a state that the television set displays the list of the main content, the user UA of the user equipment 2 selects main content that the user wishes to view, and inputs main content identification information for identifying the selected main content.

Thus, as shown in Fig. 5, the user equipment 2 transmits a content transmission request as a process request including the inputted main content identification information, the code rate related to the main content identification information, user authentication success information as user identification information for identifying the user, and equipment address information, to the Core IMS part 30 (step A501).

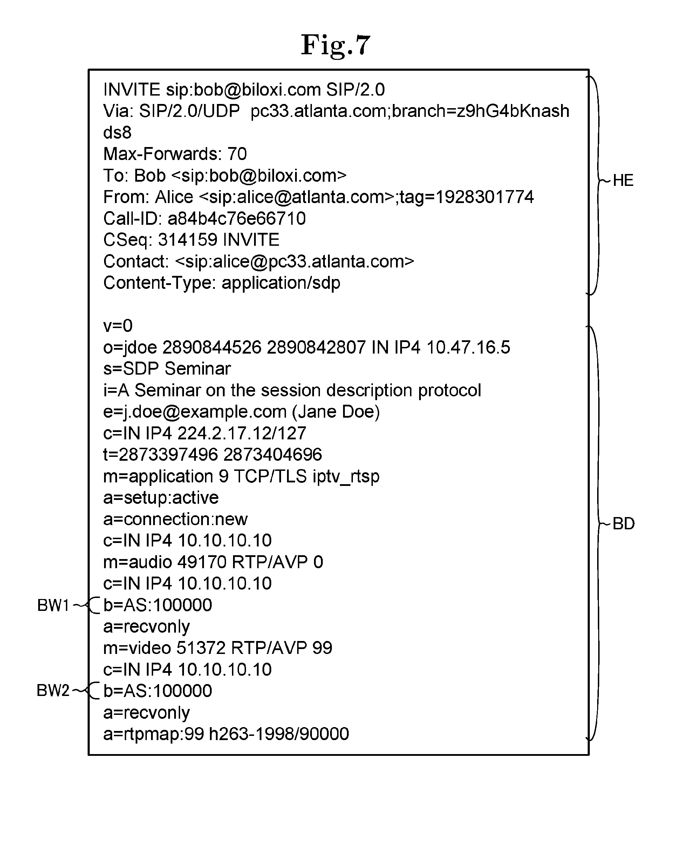

The content transmission request is transmitted as an INVITE message (a message that "INVITE" is set as a method) of SIP messages. As shown in Fig. 7, the INVITE message as the content transmission request includes a header part HD and a body part BD.

The body part BD includes a code rate related to main content identification information inputted by the user UA as communication bandwidth information BW1 and BW2 each showing a communication bandwidth. In this exemplary embodiment, the communication bandwidth information BW1 is information showing the code rate for sounds, and the communication bandwidth information BW2 is information showing the code rate for images. Moreover, the body part BD includes the communication bandwidth information BW1 and BW2 as the attribute "AS" value of the type "b" value in SDP

The content delivery system 1 may be configured to use a combined value of the code rate for sounds and the code rate for images as a code rate related to main content identification information.

Then, the Core IMS part 30 receives the content transmission request. Next, the Core IMS part 30 executes a band reservation process as preparation for securing a communication band. Then, the Core IMS part 30 transmits the received content transmission request to the service control functions part 40 (step B501).

Next, the service control functions part 40 receives the content transmission request. Then, the service control functions part 40 acquires insertion number information and insertion position information stored in relation to the main content identification information included in the received content transmission request, from among insertion number information and insertion position information stored by the advertisement insertion information storage part 43.

Then, the service control functions part 40 selects advertisement content identification information of by a number shown by the acquired insertion number information, from among advertisement content identification information stored by the advertisement attribute information storage part 42. Next, the service control functions part 40 generates playlist information based on the selected advertisement content identification information, the main content identification information included in the content transmission request, and the acquired insertion position information (step C501). Playlist information is information including main content identification information and advertisement content identification information.

Then, the service control functions part 40 selects the media server 4b (the media functions part 60), and transmits a content transmission instruction to the selected media functions part 60 via the Core IMS part 30 (step C502). A content transmission instruction includes the generated playlist information, user identification information, and equipment address information.

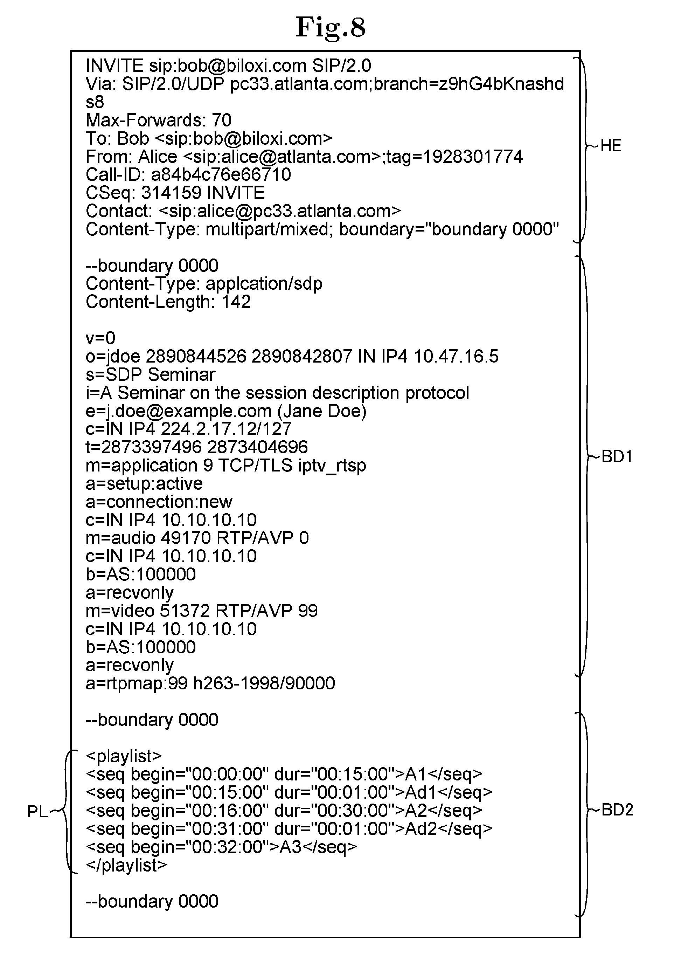

The content transmission instruction is transmitted as an INVITE message of SIP messages. As shown in Fig. 8, an INVITE message as the content transmission instruction includes a header part HD, a first body part BD1, and a second body part BD2. That is to say, the body part of this INVITE message is formed by multiple parts.

In this exemplary embodiment, the first body part BD1 is information according to SDP (Session Description Protocol), and the second body part BD2 is information according to the XML (Extensible Markup Language) format.

In this exemplary embodiment, playlist information PL includes five pieces of content element information each identified by a "seq" tag. First content element information is formed by a combination of "A1" as main content identification information, "00:00:00" as a reproduction start position of the main content, and "00:15:00" as a reproduction time of the main content. Second content element information is formed by a combination of "Ad1" as advertisement content identification information, "00:15:00" as a reproduction start position of the advertisement content, and "00:01:00" as a reproduction time of the advertisement content. Each of the third to fifth content element information is formed in a similar manner as the first content element information and the second content element information.

Then, the media functions part 60 receives the content transmission instruction. Next, the media functions part 60 acquires content identification information included in the playlist information included in the received content transmission instruction. Then, the media functions part 60 determines whether it is possible to transmit content data identified by the acquired content identification information (i.e., whether it is possible to transmit content data) (step D501).

Assuming the media functions part 60 can transmit the content data identified by the content identification information included in the playlist information, a description will be continued. In a case that the media functions part 60 cannot transmit the content data identified by the content identification information included in the playlist information, the media functions part 60 outputs transmission-impossible information, transmits the outputted transmission-impossible information to the service control functions part 40 via the Core IMS part 30, and aborts a process after that. The transmission-impossible information is transmitted as a response message (a response including "301 or "302" as a status code in a start line) of SIP messages.

The media functions part 60 acquires a code rate stored by the content data storage part 62 in relation to the acquired content identification information as a communication bandwidth necessary for transmitting content data identified by the content identification information. Then, the media functions part 60 acquires the maximum value of the acquired communication bandwidth as a maximum communication bandwidth (step D502).

Next, the media functions part 60 determines a media server for transmitting content data, based on the playlist information and equipment address information included in the content transmission instruction. Moreover, the media functions part 60 transmits a transmission permission notice to the service control functions part 40 via the Core IMS part 30 (step D503).

A transmission permission notice includes media delivery specification information for specifying the determined media server (in this exemplary embodiment, the media server 4b), and maximum communication bandwidth information showing the maximum communication bandwidth acquired in step D502 described above. The transmission permission notice is transmitted as an OK message (a response including "200" as a status code and "OK" in a start line) of SIP messages.

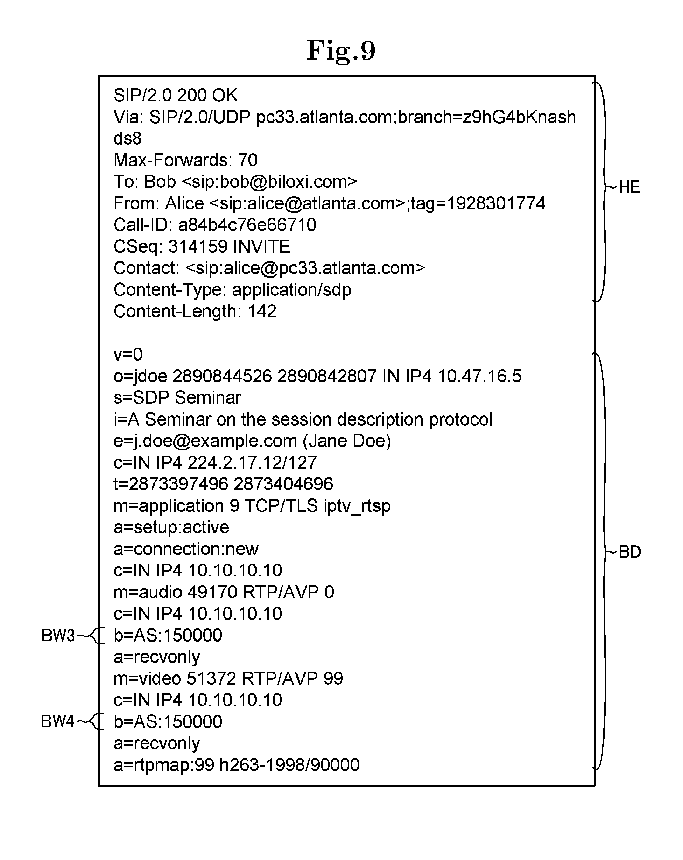

As shown in Fig. 9, the OK message as the transmission permission notice includes a header part HD and a body part BD. The body part BD includes the maximum communication bandwidth information BW3 and BW4. In this exemplary embodiment, the maximum communication bandwidth information BW3 is information showing the code rate for sounds, and the maximum communication bandwidth information BW4 is information showing the code rate for images.

Thus, the OK message transmitted as the transmission permission notice is one of connection establishing messages that the Core IMS part 30 transmits and receives to and from each of the user equipment 2, the service control functions part 40 and the media functions part 60 in order that the Core IMS part 30 establishes a connection between the user equipment 2 and the media functions part 60.

That is to say, the media functions part 60 includes maximum communication bandwidth information in a connection establishing message, thereby transmitting maximum communication bandwidth information to the Core IMS part 30. According to this, the media functions part 60 does not need to additionally transmit a message other than a connection establishing message for the purpose of transmitting maximum communication bandwidth information to the Core IMS part 30. That is to say, it is possible to decrease the number of communications between the Core IMS part 30 and the media functions part 60. In other words, it is possible to reduce the process load and/or communication load required when the Core IMS part 30 and the media functions part 60 transmit and receive messages.

In other words, the media functions part 60 transmits maximum communication bandwidth information to the Core IMS part 30 when the Core IMS part 30 executes a process for establishing a connection between the user equipment 2 and the media functions part 60.

In a case that the media functions part 60 is configured to transmit maximum communication bandwidth information to the Core IMS part 30 before the Core IMS part 30 executes the process for establishing a connection and moreover playlist information is changed after the maximum communication bandwidth information is transmitted, it is impossible to reflect the changed playlist information on the maximum communication bandwidth information received by the Core IMS part 30.

In contrast, according to the configuration described above, the media functions part 60 can transmit maximum communication bandwidth information on which latest playlist information at a moment that the Core IMS part 30 executes the process for establishing a connection is reflected, to the Core IMS part 30.

Thus, the service control functions part 40 receives the media delivery specification information and the maximum communication bandwidth information. Then, the service control functions part 40 transmits a band securing instruction including the received media delivery specification information and maximum communication bandwidth information to the Core IMS part 30 (step C503). The band securing instruction is transmitted as an OK message of SIP messages. The service control functions part 40 may be configured to transmit (i.e., transfers) the transmission permission notice received from the media functions part 60 to the Core IMS part 30 as the band securing instruction.

Upon reception of the band securing instruction, the Core IMS part 30 transmits the maximum communication bandwidth information having been received and communication path specification information that specifies a communication path between the media server 4b specified by the received media delivery specification information and the user equipment 2, to the transport functions part 80. Thus, the transport functions part 80 executes a process (a band securing process) for securing a communication band of the maximum communication bandwidth shown by the received maximum communication bandwidth information in the communication path specified by the received communication path specification information.

Then, when the band securing process is completed, the Core IMS part 30 transmits a transmission preparation completion notice to the user equipment 2 (step B502). The transmission preparation completion notice includes the received media delivery specification information. The transmission preparation completion notice is transmitted as an OK message of SIP messages. The Core IMS part 30 may be configured to transmit (i.e., transfer) the band securing instruction received from the service control functions part 40 to the user equipment 2 as the transmission preparation completion notice.

Then, upon reception of the transmission preparation completion notice, the user equipment 2 transmits a connection preparation completion notice to the service control functions part 40 via the Core IMS part 30 (step A502). The connection preparation completion notice is transmitted as an ACK message (a message in which "ACK" is set as a method) of SIP messages.

Upon reception of the connection preparation completion notice, the service control functions part 40 transmits a connection preparation completion notice similar to the received connection preparation completion notice to the media functions part 60 via the Core IMS part 30 (step C504). This connection preparation completion notice is transmitted as an ACK message of SIP messages.

Then, when the media functions part 60 receives the connection preparation completion notice, a connection (a session) having the maximum communication bandwidth shown by the maximum communication bandwidth information between the media server 4b and the user equipment 2 is thereby established (step E501).

Thus, the Core IMS part 30 and the transport functions part 80 establish a connection that is between the media server 4b (the media functions part 60) and the user equipment 2 via the Core IMS part 30 and that has the maximum communication bandwidth shown by the maximum communication bandwidth information. It is possible to say that the Core IMS part 30 and the transport functions part 80 relay SIP messages to establish a connection between the media server 4b (the media functions part 60) and the user equipment 2.

Further, it is possible to say that SIP messages that the connection control system 3 (the Core IMS part 30) transmits and receives to and from each of the user equipment 2, the service control server 4a and the media server 4b in steps A501 to E501 are connection establishing messages used when the connection control system 3 establishes a connection between the user equipment 2 and the media server 4b.

In this exemplary embodiment, both a connection for performing communication according to RTSP (Real Time Streaming Protocol) and a connection for performing communication according to RTP are simultaneously established.

After that, the user equipment 2 transmits a content viewing request to the media server 4b (the media functions part 60) specified by the media delivery specification information included in the received transmission preparation completion notice (step A503 of Fig. 6).

The content viewing request includes the main content identification information included in the transmission preparation completion notice and user identification information for identifying the user UA of the user equipment 2. The content viewing request is transmitted as a SETUP message (a message in which "SETUP" is set as a method) of RTSP messages (messages according to RTSP).

Then, the media functions part 60 receives the content viewing request. Next, the media functions part 60 acquires playlist information stored in relation to the main content identification information and user identification information included in the received content viewing request.

In a case that the media functions part 60 is configured to store playlist information in relation to message identification information, the user equipment 2 is configured to transmit a content viewing request including the message identification information included in the transmitted content transmission request. In this case, the media functions part 60 acquires playlist information stored in relation to the message identification information included in the received viewing request.

Further, in a case that the media functions part 60 is configured to store playlist information in relation to playlist identification information including main content identification information, user identification information, message identification information or a combination thereof, the user equipment 2 is configured to transmit a content viewing request including the playlist identification information. In this case, the media functions part 60 acquires playlist information stored in relation to the playlist identification information included in the received content viewing request.

In this exemplary embodiment, the media functions part 60 is configured to acquire stored playlist information, but may be configured to acquire playlist information from the playlist generation part 44 of the service control functions part 40.

Next, the media functions part 60 generates viewing content data based on the playlist information having been acquired and the advertisement content data and main content data stored by the content data storage part 62. That is to say, the media functions part 60 generates viewing content data showing viewing content in which advertisement content is inserted in main content (step D504). That is to say, the viewing content data includes plural content data.

Then, the media functions part 60 transmits a content transmission preparation completion notice to the user equipment 2 having transmitted the content viewing request (step D505). The content transmission preparation completion notice is transmitted as an OK message (a response including "200" as a status code and "OK" in a start line) of RTSP messages.

Then, upon reception of the content transmission preparation completion notice, the user equipment 2 transmits a reproduction start request to the media functions part 60 (step A504). The reproduction start request is transmitted as a PLAY message (a message in which "PLAY" is set as a method) of RTSP messages.

Next, upon reception of the reproduction start request, the media functions part 60 transmits a reproduction start notice to the user equipment 2 (step D506). A reproduction start notice is information showing start of transmission of content data. The reproduction start notice is transmitted as an OK message of RTSP messages.

Then, the media functions part 60 transmits the viewing content data generated in step D504 described above to the user equipment 2 (step D507). At this moment, the media functions part 60 transmits data in accordance with RTP by using the connection (the session) established by the Core IMS part 30 and the transport functions part 80 in step E501 described above.

Thus, the user equipment 2 receives the viewing content data, and causes the not-shown television set to output viewing content (in this exemplary embodiment, a moving image) shown by the received viewing content data.

As described above, the first exemplary embodiment of the content delivery system according to the present invention can prevent, even when a communication bandwidth necessary for transmitting each of plural content data varies depending on the content data, a communication bandwidth becomes insufficient when each of the content data is transmitted. As a result, it is possible to prevent decrease of communication quality (e.g., interruption of reproduction of content by the user equipment 2) at the time of transmission of plural content data by using one connection.

Furthermore, the content delivery system 1 according to the first exemplary embodiment is configured to acquire a code rate stored in relation to content identification information, as a communication bandwidth necessary for transmitting content data identified by the content identification information.

In a case that content is reproduced at a constant speed based on content data received by the user equipment 2, a code rate is substantially equal to a communication bandwidth used for transmitting the content data. Moreover, content is usually reproduced at a constant speed. Therefore, by configuring the content delivery system 1 as described above, it is possible to make an acquired communication bandwidth sufficiently close to the maximum value of a communication bandwidth used at the time of actual transmission of plural content data. As a result, it is possible to prevent decrease of communication quality when transmitting plural content data.

Further, the content delivery system 1 according to a first modified example of the first exemplary embodiment is configured so that, in the case of receiving transmission-impossible information, the service control functions part 40 changes playlist information and transmit a content transmission instruction including the playlist information after changed to the media functions part 60 again. After that, this content delivery system 1 executes a process after Step D501.

The content delivery system 1 according to the first modified example makes it possible to prevent the application server system 4 from staying unable to content data identified by content identification information included in playlist information. Consequently, the user UA of the user equipment 2 can view content.

Further, the content delivery system 1 according to a second modified example of the first exemplary embodiment is configured so that, in the case of receiving transmission-impossible information, the service control functions part 40 transmits the transmission-impossible information to the user equipment 2. Consequently, it is possible to notify the user UA of the user equipment 2 that the application server system 4 cannot transmit content data identified by content identification information includes in playlist information.

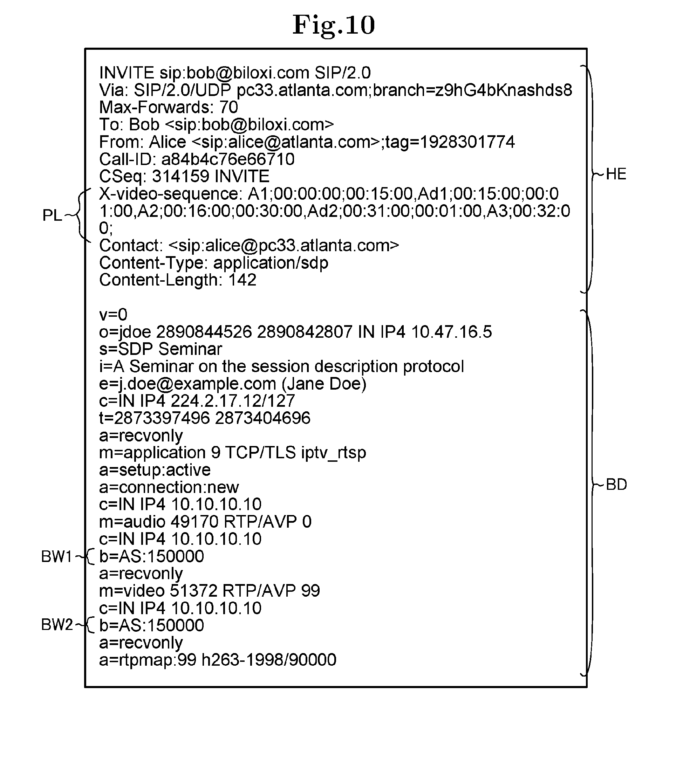

The first exemplary embodiment is configured so that an INVITE message includes a header part HD and two body parts BD1 and BD2, but may be configured so that an INVITE message includes one header part HD and one body part BD as shown in Fig. 10. In this case, the first exemplary embodiment may be configured to include playlist information PL in the header part HD of the INVITE message. In the example shown in Fig. 10, the playlist information PL is included as a value of a field "X-video-sequence" in the header part HD of the INVITE message.

Also in this case, the media functions part 60 transmits an OK message in which the communication bandwidth information BW1 and BW2 included in the received INVITE message are replaced with the maximum communication bandwidth information showing the acquired maximum communication bandwidth, to the Core IMS part 30.

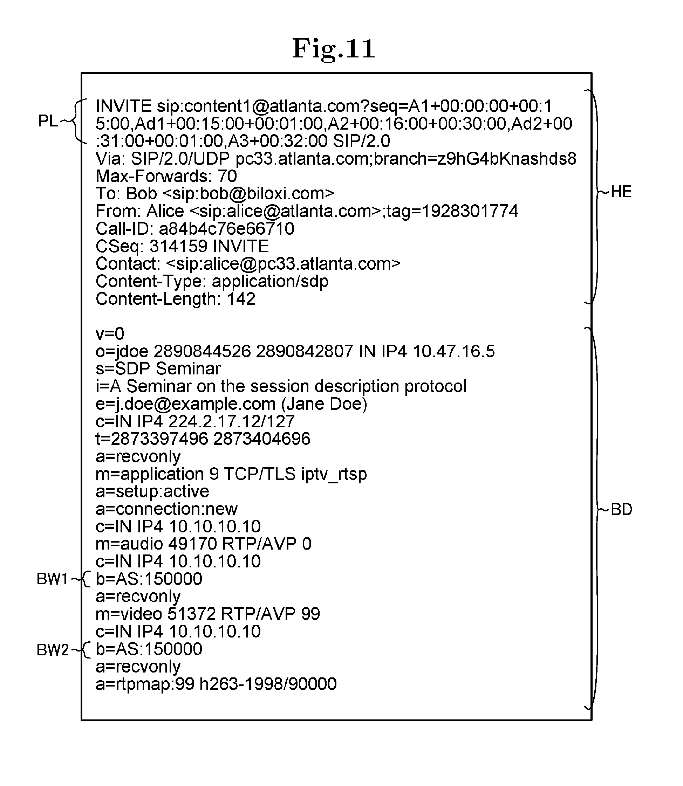

Further, the first exemplary embodiment may be configured to include playlist information in a start line (a Request-Line) of an INVITE message. For example, as shown in Fig. 11, the first exemplary embodiment may be configured to include playlist information PL in Request-URI (Uniform Resource Identifier) of a start line.

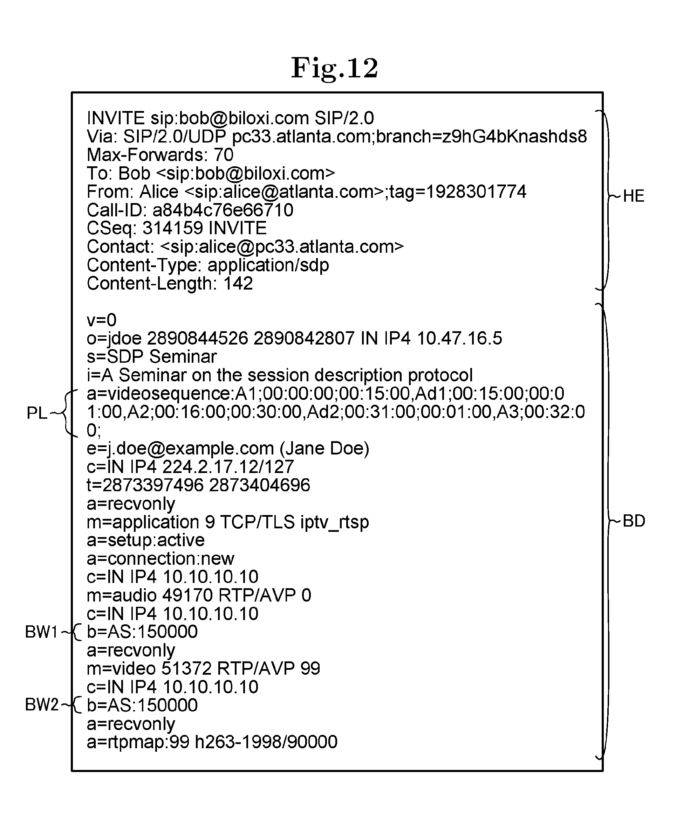

Further, the first exemplary embodiment may be configured to include playlist information in the body part BD of an INVITE message. For example, as shown in Fig. 12, the first exemplary embodiment may be configured to include playlist information PL as the value of an attribute "videosequence" of the type "a" value in SDP in the body part BD.

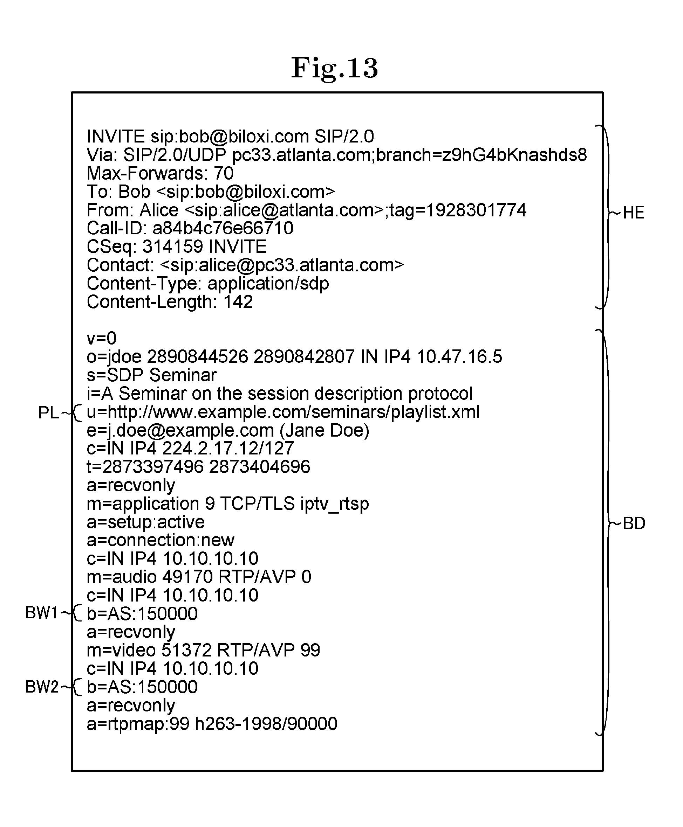

Further, the first exemplary embodiment is configured to directly include playlist information in an INVITE message, but may be configured to include reference information for referring to playlist information in an INVITE message. For example, as shown in Fig. 13, the first exemplary embodiment may be configured to include reference information (substantially, playlist information) PL showing URI for referring to (acquiring) playlist information as the type "u" type in SDP in the body part BD.

The first exemplary embodiment is configured so that the processes in steps A501 to E501 are executed and both a connection for performing communication according to RTSP (an RTSP connection) and a connection for performing communication according to RTP (an RTP connection) are thereby established at a time. Another modified example of the first exemplary embodiment may be configured so that the RTSP connection is established, a similar process to that o step A501 to step E501 are executed again, and the RTP connection is thereby established.

Further, in the first exemplary embodiment, the content delivery system 1 is configured to transmit and receive playlist information and maximum communication bandwidth information by including into INVITE messages, but may be configured to transmit and receive by including into messages other than INVITE messages (e.g., message in which "MESSAGE," "INFO" or "NOTIFY" is set as method).

### <Second Exemplary Embodiment>

Next, a content delivery system according to a second exemplary embodiment of the present invention will be described. The content delivery system according to the second exemplary embodiment is different from the content delivery system according to the first exemplary embodiment in, when playlist information is changed, reacquiring a maximum communication bandwidth based on the playlist information after changed and reestablishing a connection having the newly acquired maximum communication bandwidth. Therefore, a description will be made below focusing on the different point.

In a case that a playlist change condition set in advance is satisfied in a state that a connection between the user equipment 2 and the media server 4b is established, the playlist generation part 44 of the service control functions part 40 in the second exemplary embodiment changes stored playlist information.

In this exemplary embodiment, the playlist change condition is a condition satisfied in a case that insertion number information stored in relation to main content identification information included in playlist information stored by the playlist generation part 44 is changed and/or in a case that transmission-impossible information is received from the media functions part 60. Moreover, the playlist change condition may be a condition satisfied in a case that a preset update period has passed, and/or a condition satisfied in a case that an instruction to change the playlist information is received from the user equipment 2.

When the playlist generation part 44 changes the playlist information, the information transceiver part 41 transmits a playlist change notice to the media server 4b via the Core IMS part 30. A playlist change notice is information including playlist information after changed.

Furthermore, the information transceiver part 41 receives a communication bandwidth change instruction transmitted by the media server 4b in response to the playlist change notice. The communication bandwidth change instruction includes media delivery specification information for specifying a media server (in this exemplary embodiment, the media server 4b), and maximum communication bandwidth information. Upon reception of the communication bandwidth change instruction, the information transceiver part 41 transmits a band securing instruction including the received media delivery specification information and maximum communication bandwidth information to the Core IMS part 30.

The information transceiver part 61 receives the playlist change notice from the service control server 4a via the Core IMS part 30.

The maximum communication bandwidth acquisition part 67 stores an acquired maximum communication bandwidth until transmission of content data from the media server 4b to the user equipment 2 based on playlist information that is the basis of acquisition of the maximum communication bandwidth is completed.

Furthermore, in a case that the playlist change notice is received by the information transceiver part 61, the maximum communication bandwidth acquisition part 67 acquires content identification information included in playlist information included in the playlist change notice.

Next, the maximum communication bandwidth acquisition part 67 acquires a code rate stored by the content data storage part 62 in relation to the acquired content identification information, as a communication bandwidth necessary for transmitting content data identified by the content identification information. Then, the maximum communication bandwidth acquisition part 67 acquires the maximum value of the acquired communication bandwidth, as a maximum communication bandwidth.

Thus, in a case that playlist information is changed in a state that a connection between the media server 4b and the user equipment 2 is established, the maximum communication bandwidth acquisition part 67 acquires a maximum communication bandwidth based on the playlist information after changed.

Then, the maximum communication bandwidth acquisition part 67 determines whether the maximum communication bandwidth acquired based on the playlist information after changed (a maximum communication bandwidth after changed) is larger than the maximum communication bandwidth acquired based on the playlist information before changed (a maximum communication bandwidth before changed).

In a case that the maximum communication bandwidth acquisition part 67 determines that the maximum communication bandwidth after changed is larger than the maximum communication bandwidth before changed, the information transceiver part 61 transmits a communication bandwidth change instruction including maximum communication bandwidth information showing the maximum communication bandwidth after changed to the service control server 4a via the Core IMS part 30.

Next, an operation of the content delivery system 1 according to the second exemplary embodiment will be specifically described.
In a like manner as the content delivery system 1 according to the first exemplary embodiment, the content delivery system 1 executes the processes shown in Figs. 4 and 5, thereby establishing a connection between the media server 4b and the user equipment 2.

Furthermore, in a like manner as the content delivery system 1 according to the first exemplary embodiment, the content delivery system 1 executes the process shown in Fig. 6, thereby transmitting content data based on playlist information from the media server 4b to the user equipment 2 by using the established connection.

Assuming the playlist change condition is satisfied before transmission of content data to the user equipment 2 based on the playlist information (the playlist information generated in step C501 of Fig. 5) is completed, a description will be continued.

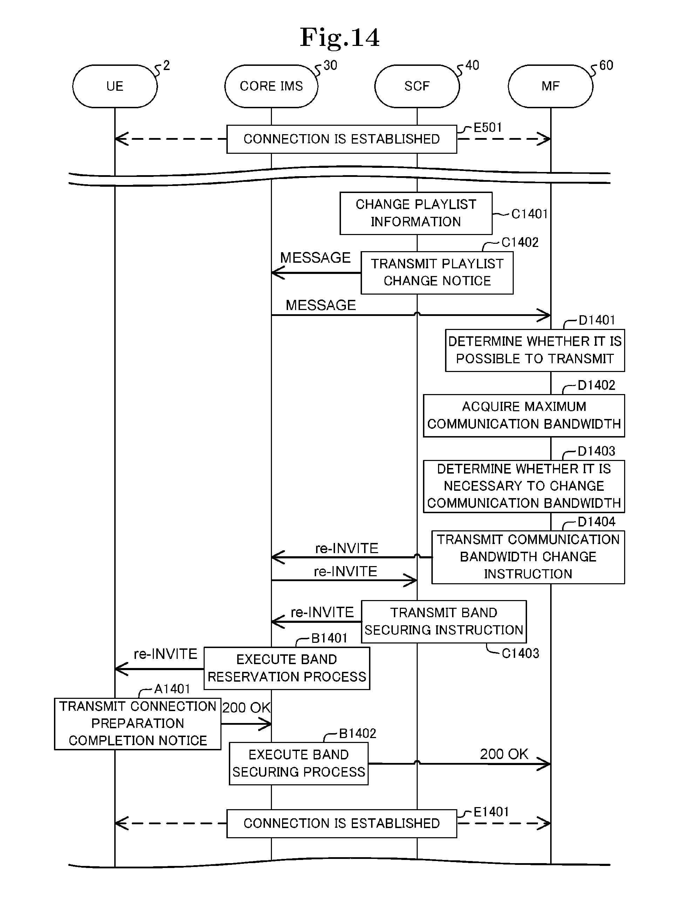

In this case, as shown in Fig. 14, the service control functions part 40 changes the playlist information stored by the storage device (i.e., the playlist information generated in step C501 described above) (step C1401).

In this exemplary embodiment, in a case that the insertion number information stored in relation to the main content identification information included in the playlist information stored by the playlist generation part 44 is changed, the service control functions part 40 generates new playlist information based on the insertion number information after changed, and updates the stored playlist information to the generated playlist information. For example, in a case that the insertion number shown by the insertion number information increases, the service control functions part 40 adds content element information to the stored playlist information.

Further, when receiving transmission-impossible information from the media functions part 60, the service control functions part 40 replaces advertisement content identification information included in the stored playlist information with advertisement content identification information other than the included advertisement content identification information.

After that, the service control functions part 40 selects the media server 4b (the media functions part 60), and transmits a playlist change notice to the selected media functions part 60 via the Core IMS part 30 (step C1402). The playlist change notice includes the playlist information after changed, user identification information and equipment address information. The playlist change notice is transmitted as a MESSAGE message (a message in which "MESSAGE" is set as a method) of SIP messages.

Then, the media functions part 60 receives the playlist change notice. Next, the media functions part 60 acquires content identification information included in the playlist information included in the received playlist change notice. Then, the media functions part 60 determines whether it is possible to transmit content data identified by the acquired content identification information (i.e., whether it is possible to transmit the content data) (step D1401).

Assuming it is possible to transmit the content data identified by the content identification information included in the playlist information, a description will be continued. In a case that the media functions part 60 cannot transmit the content data identified by the content identification information included in the playlist information, the media functions part 60 transmits transmission-impossible information to the service control functions part 40 via the Core IMS part 30, and aborts a process after that. The transmission-impossible information is transmitted as a response message (a response including "301" or "302" as a status code in a start line) of SIP messages.

In this case, the media functions part 60 acquires a code rate stored by the content data storage part 62 in relation to the acquired content identification information, as a communication bandwidth necessary for transmitting the content data identified by the content identification information. Then, the media functions part 60 acquires the maximum value of the acquired communication bandwidth as a maximum communication bandwidth (step D1402).

Next, the media functions part 60 determines whether the maximum communication bandwidth acquired in step D1402 (the maximum communication bandwidth acquired based on the playlist information after changed (the maximum communication bandwidth after changed)) is larger than the maximum communication bandwidth stored by the storage device (the maximum communication bandwidth acquired in step D502, i.e., the maximum communication bandwidth acquired based on the playlist information before changed (the maximum communication bandwidth before changed)); that is, determines whether it is necessary to change a communication bandwidth (step D1403).

Assuming the maximum communication bandwidth after changed is larger than the maximum communication bandwidth before changed, a description will be continued. In a case that the maximum communication bandwidth after changed is smaller than the maximum communication bandwidth before changed, the media functions part 60 aborts a process after changed.

In this case, the media functions part 60 determines a media server to which content data is transmitted based on the playlist information and equipment address information included in the playlist change notice. Moreover, the media functions part 60 transmits a communication bandwidth change instruction to the service control functions part 40 via the Core IMS part 30 (step S1404).

The communication bandwidth change instruction includes media delivery specification information for specifying the determined media server (in this exemplary embodiment, the media server 4b) and maximum communication bandwidth information showing the maximum communication bandwidth after changed. The communication bandwidth change instruction is transmitted as a re-INVITE message (a message in which "re-INVITE" is set as a method) of SIP messages.

Thus, the service control functions part 40 receives the media delivery specification information and the maximum communication bandwidth information. Then, the service control functions part 40 transmits a band securing instruction including the received media delivery specification information and maximum communication bandwidth information to the Core IMS part 30 (C1403). The band securing instruction is transmitted as a re-INVITE message of SIP messages.

Upon reception of the band securing instruction, the Core IMS part 30 executes a band reservation process as preparation for securing a communication band. Then, the Core IMS part 30 transmits a transmission preparation completion notice to the user equipment 2 (step B1401). The transmission preparation completion notice includes the received media delivery specification information. The transmission preparation completion notice is transmitted as a re-INVITE message of SIP messages.

Then, upon reception of the transmission preparation completion notice, the user equipment 2 transmits a connection preparation completion notice to the Core IMS part 30 (step A1401). The connection preparation completion notice is transmitted as an OK message (a response including "200" as a status code and "OK" in a start line) of SIP messages.

Upon reception of the connection preparation completion notice, the Core IMS part 30 transmits maximum communication bandwidth information included in the band securing instruction received in step B1401 described above and communication path specification information for specifying a communication path between the media server 4b specified by the media delivery specification information included in the band securing instruction and the user equipment 2 to the transport functions part 80. Thus, the transport functions part 80 executes a process for securing a communication path of a maximum communication bandwidth shown by the received maximum communication bandwidth information in the communication path specified by the received communication path specification information (executes a band securing process).

Then, upon completion of the band securing process, the Core IMS part 30 transmits the connection preparation completion notice to the media functions part 60 (step B1402). This connection preparation completion notice is also transmitted as an OK message of SIP messages.

Then, when the media functions part 60 receives the connection preparation completion notice, a connection (a session) having the maximum communication bandwidth shown by the maximum communication bandwidth information between the media server 4b and the user equipment 2 is established (step E1401).

Thus, in a case that a maximum communication bandwidth is acquired based on playlist information after changed, the Core IMS part 30 and the transport functions part 80 reestablishes the established connection so as to have the acquired maximum communication bandwidth.

After that, when the user equipment 2 transmits a content viewing request to the media server 4b, the content delivery system 1 executes the process shown in Fig. 6, thereby transmitting content data from the media server 4b to the user equipment 2 by using the connection established in step E1401 described above.

As described above, the second exemplary embodiment of the content delivery system according to the present invention can produce actions and effects similar to those the content delivery system 1 according to the first exemplary embodiment can.

Furthermore, even if playlist information is changed and a maximum communication bandwidth is thereby increased, the content delivery system 1 according to the second exemplary embodiment can reestablishes a connection having the maximum communication bandwidth. Therefore, it is possible to prevent decrease of communication quality at the time of transmission of content data included in the playlist information after changed.

### <Third Exemplary Embodiment>

Next, a content delivery system according to a third exemplary embodiment of the present invention will be described. The content delivery system according to the third exemplary embodiment is different from the content delivery system according to the first exemplary embodiment in, when second user equipment subsequently receives content data having been received by first user equipment, changing playlist information in accordance with the attribute of the second user equipment and establishing a connection having a maximum communication bandwidth acquired based on the playlist information after changed. Therefore, a description will be made below focusing on the different point.

The content delivery system 1 according to the third exemplary embodiment includes a plurality of (in this exemplary embodiment, two) user equipments 2a and 2b. The respective user equipments 2a and 2b have a similar configuration as the user equipment 2 in the first exemplary embodiment. The user equipment 2a may be described as user equipment #1 (UE#1). Likewise, the user equipment 2b may be described as user equipment #2 (UE#2).

The request transmission part 11 of each of the user equipments 2a and 2b transmits an equipment change request as a process request to the service control server 4a via the connection control system 3. The equipment change request is information of a request for changing user equipment that is a content data transmission destination. The equipment change request includes user authentication success information (i.e., user identification information), equipment address information, and transmission destination user equipment specification information for specifying the user equipment after changed (in this exemplary embodiment, equipment address information)).

Further, the request transmission part 11 transmits a subsequent viewing request as a process request to the service control server 4a via the connection control system 3. The subsequent viewing request is information of a request that own equipment subsequently receives content data received by other user equipment based on playlist information. The subsequent viewing request is information including user authentication success information (i.e., user identification information) and equipment address information.

When the equipment change request is received (accepted) by the information transceiver part 41, the playlist generation part 44 generates subsequent viewing information and stores the generated subsequent viewing information. The subsequent viewing information includes user identification information and transmission destination user equipment specification information that are included in the equipment change request and playlist information stored in relation to the user identification information.

Furthermore, the subsequent viewing information includes reproduction position information showing a current transmission position of content data to be transmitted based on the playlist information to the user equipment having transmitted the equipment change request (i.e., a content reproduction position in the user equipment).

Furthermore, in a case that a subsequent viewing request is received (accepted) by the information transceiver part 41, the playlist generation part 44 acquires user basic information stored by the user basic information storage part 51 in relation to the user identification information included in the subsequent viewing request. Moreover, the playlist generation part 44 acquires subsequent viewing information including the user identification information included in the subsequent viewing request, from among the stored subsequent viewing information.

Then, the playlist generation part 44 changes the playlist information included in the acquired subsequent viewing information based on the equipment attribute information included in the acquired user basic information. The play generation part 44 configures a playlist information changing means.

For example, the playlist generation part 44 replaces content identification information included in playlist information with content identification information for identifying content data having a code rate corresponding to the resolution of a display and/or maximum communication speed shown by equipment attribute information.

The playlist generation part 44 may be configured to replace the content identification information included in the playlist information with content identification information for identifying content data having a code rate corresponding to at least one of the resolution of a display shown by the equipment attribute information, the maximum communication speed shown by the equipment attribute information, and a usable bandwidth as a communication bandwidth that can be used for transmitting content data from the media server 4b to the user equipments 2a, 2b.

The delivery request part 45 outputs a content transmission instruction. The content transmission instruction includes playlist information changed by the playlist generation part 44, reproduction position information included in subsequent viewing information, user authentication success information (i.e., user identification information) included in the subsequent viewing information, and equipment address information.

The information transceiver part 41 transmits the content transmission instruction outputted by the delivery request part 45 to the media server 4b via the Core IMS part 30. Moreover, the information transceiver part 41 receives a transmission permission notice transmitted by the media server 4b in response to the content transmission instruction. The transmission permission notice includes media delivery specification information for specifying a media server (in this exemplary embodiment, the media server 4b) and maximum communication bandwidth information. Upon reception of the transmission permission notice, the information transceiver part 41 transmits a band securing instruction to the Core IMS part 30.

In a case that the content transmission instruction is received by the information transceiver part 61, the maximum communication bandwidth acquisition part 67 acquires content identification information included in playlist information included in the content transmission instruction.

Next, the maximum communication bandwidth acquisition part 67 acquires a code rate stored by the content data storage part 62 in relation to the acquired content identification information, as a communication bandwidth necessary for transmitting content data identified by the content identification information. Then, the maximum communication bandwidth acquisition part 67 acquires the maximum value of the acquired communication bandwidth as a maximum communication bandwidth.

Thus, in a case that playlist information is changed by the playlist generation part 44, the maximum communication bandwidth acquisition part 67 acquires a maximum communication bandwidth based on the playlist information after changed.

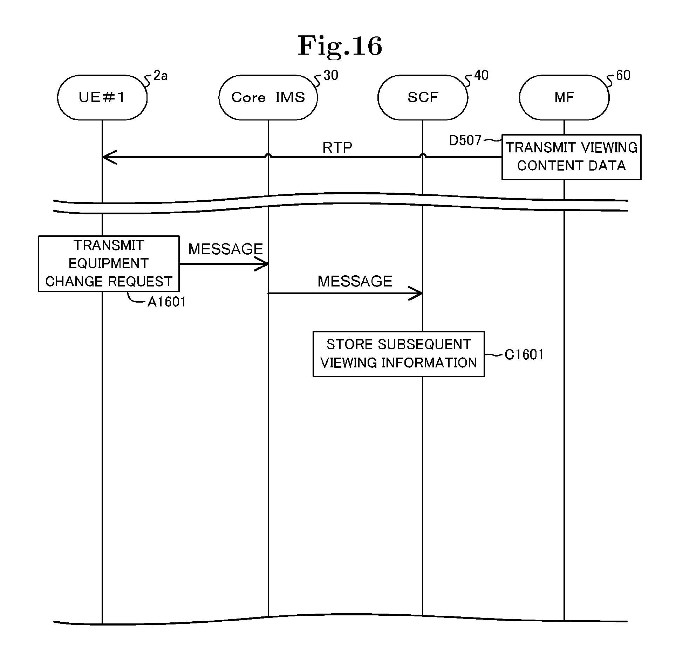

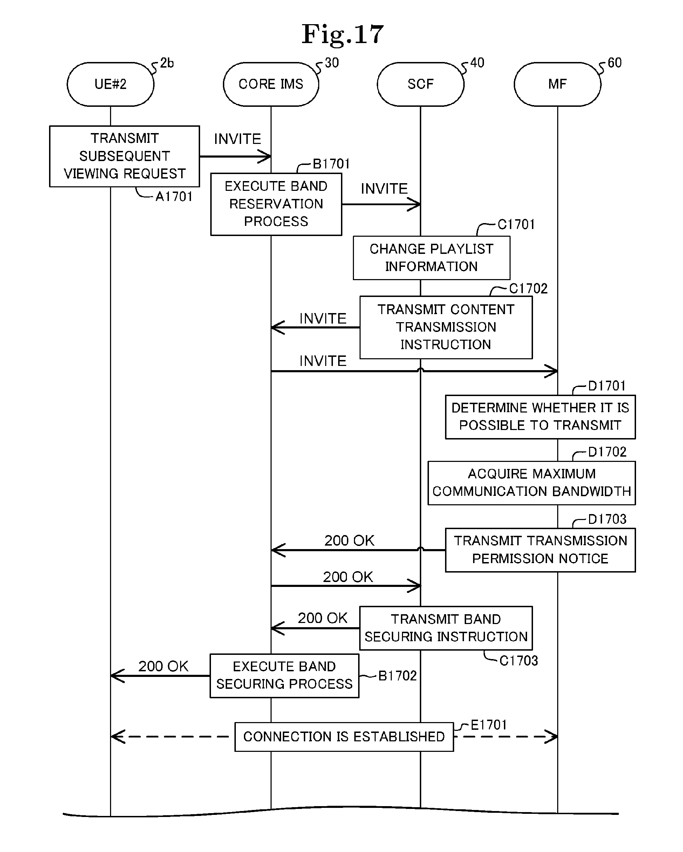

Next, an operation of the content delivery system 1 according to the third exemplary embodiment will be described with reference to Figs. 16 and 17.

This content delivery system 1 executes the processes shown in Figs. 4 and 5 in a like manner as the content delivery system 1 according to the first exemplary embodiment, thereby establishing a connection between the media server 4b and the user equipment 2a as the first user equipment. Moreover, the content delivery system 1 executes the process shown in Fig. 6, thereby transmitting content data (viewing content data) from the media server 4b to the user equipment 2a based on playlist information (step D507 of Fig. 6).

Assuming the user UA inputs information of an instruction to change user equipment as a content data transmission destination from the user equipment 2a to the user equipment 2b into the user equipment 2a, a description will be continued.

In this case, as shown in Fig. 16, the user equipment 2a transmits an equipment change request that is a request for changing user equipment as a content data transmission destination from the user equipment 2a to the user equipment 2b, to the service control functions part 40 via the Core IMS part 30 (step A1601). The equipment change request is transmitted as a MESSAGE message of SIP messages.

Thus, the service control functions part 40 receives the equipment change request. Then, the service control functions part 40 generates subsequent viewing information, and stores the generated subsequent viewing information (step C1601). The subsequent viewing information includes user identification information (herein, information for identifying the user UA) and transmission destination user equipment specification information (herein, information for specifying the user equipment 2b) that are included in the equipment change request, and playlist information that is stored in relation to the user identification information.

Furthermore, the subsequent viewing information includes reproduction position information showing a current transmission position (i.e., a reproduction position of content in the user equipment 2a) of content data transmitted based on the playlist information to the user equipment 2a having transmitted the equipment change request.

After that, the user UA inputs information of an instruction that the user equipment 2b subsequently receives the content data having been received by the user equipment 2a based on the playlist information, into the user equipment 2b.

Thus, as shown in Fig. 17, the user equipment 2b transmits a subsequent viewing request of requesting that the user equipment 2b subsequently receives the content data having been received by the user equipment 2a based on the playlist information, to the Core IMS part 30 (step A1701). The subsequent viewing request is transmitted as an INVITE message of SIP messages.

Then, the Core IMS part 30 receives the subsequent viewing request. Next, the Core IMS part 30 executes a band reservation process as preparation for securing a communication band. Then, the Core IMS part 30 transmits the received subsequent viewing request to the service control functions part 40 (step B1701).

Next, the service control functions part 40 receives the subsequent viewing request. The service control functions part 40 acquires user basic information stored by the user basic information storage part 51 in relation to user identification information included in the subsequent viewing request. Moreover, the service control functions part 40 acquires subsequent viewing information including the user identification information included in the subsequent viewing request, from among the stored subsequent viewing information.

Then, the service control functions part 40 changes the playlist information included in the acquired subsequent viewing information, based on equipment attribute information included in the acquired user basic information (step C1701).

Then, the service control functions part 40 selects the media server 4b (the media functions part 60), and transmits a content transmission instruction to the selected media functions part 60 via the Core IMS part 30 (step C1702). The content transmission instruction includes the changed playlist information, the user identification information, equipment address information, and the reproduction position information. The content transmission instruction is transmitted as an INVITE message of SIP messages.

After that, the content delivery system 1 executes steps D1701 to B1702 similar to steps D501 to B502 of Fig. 5. Consequently, a connection (a session) having the maximum communication bandwidth acquired in step D1702 between the media server 4b and the user equipment 2b (step E1701).

Thus, when a maximum communication bandwidth is acquired based on playlist information after changed, the Core IMS part 30 and the transport functions part 80 establishes a connection having the acquired maximum communication bandwidth between the media server 4b and the user equipment 2b.

After that, when the user equipment 2b transmits a content viewing request to the media server 4b, the content delivery system 1 executes the process shown in Fig. 6. Thus, the media server 4b transmits content data to the user equipment 2b by using the connection established in step E1701 described above from the position shown by the reproduction position information included in the content transmission instruction, based on the playlist information included in the received content transmission instruction.

As described above, the third exemplary embodiment of the content delivery system according to the present invention can produce actions and effects similar to those the content delivery system 1 according to the first exemplary embodiment can.

Furthermore, the content delivery system 1 according to the third exemplary embodiment changes playlist information based on equipment attribute information, establishes a connection having a communication bandwidth corresponding to the playlist information after changed, and transmits content data to the user equipment 2b (the second user equipment) by using the connection. Therefore, it is possible to prevent decrease of communication quality at the time of transmission of content data based on the playlist information after changed. As a result, by using the user equipment 2b, the user UA can subsequently view content having been viewed by using the equipment 2a (the first user equipment).

### <Fourth Exemplary Embodiment>

Next, a content delivery system according to a fourth exemplary embodiment of the present invention will be described. The content delivery system according to the fourth exemplary embodiment is different from the content delivery system according to the first exemplary embodiment in that user equipment generates playlist information. Therefore, a description will be made below focusing on the different point.

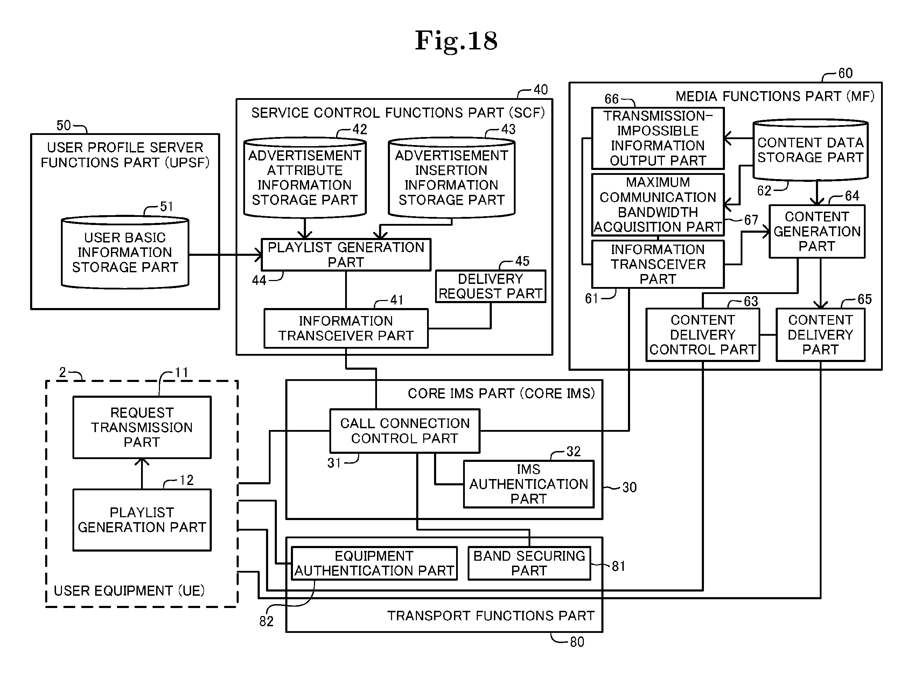

As shown in Fig. 18, a function of the user equipment 2 in the fourth exemplary embodiment includes a playlist generation part 12 in addition to the request transmission part 11 in the first exemplary embodiment.
The playlist generation part 12 generates playlist information based on plural pieces of main content identification information inputted by the user UA of the user equipment 2.

The request transmission part 11 transmits a content transmission request including the playlist information generated by the playlist generation part 12 to the service control server 4a via the Core IMS part 30. The request transmission part 11 configures a playlist information transmitting means.

The information transceiver part 41 transmits a content transmission instruction including the playlist information included in the content transmission request received from the user equipment 2, to the media server 4b via the Core IMS part 30. The information transceiver part 61 receives the content transmission instruction from the service control server 4a. The information transceiver part 61 configures a playlist information receiving means.

The content delivery system 1 according to the fourth exemplary embodiment executes a process that is similar to the process executed by the content delivery system 1 according to the first exemplary embodiment but is without step C501 of Fig. 5.

The content delivery system 1 according to the fourth exemplary embodiment can also produce actions and effects similar to those the content delivery system 1 according to the first exemplary embodiment can. Moreover, according to the content delivery system 1 of the fourth exemplary embodiment, in a case that the user UA wishes to view a plurality of contents, the user UA can view the plurality of contents all at once.

The service control functions part 40 in the fourth exemplary embodiment may be configured to be without the playlist generation part 44.

### <Fifth Exemplary Embodiment>

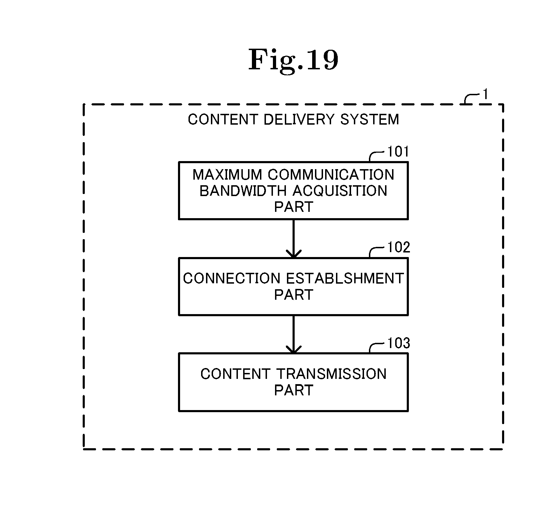

Next, a communication system according to a fifth exemplary embodiment of the present invention will be described with reference to Fig. 19.
The content delivery system 1 according to the fifth exemplary embodiment includes an application server system and a connection control system.

Further, the content delivery system 1 includes:
a maximum communication bandwidth acquisition part (a maximum communication bandwidth acquiring means) 101 for acquiring a maximum value of a communication bandwidth necessary for transmitting content data identified by content identification information included in playlist information including plural pieces of content identification information for identifying content, as a maximum communication bandwidth;
a connection establishment part (a connection establishing means) 102 for establishing a connection having the acquired maximum communication bandwidth between the application server system and user equipment; and
a content transmission part (a content transmitting means) 103 for transmitting the content data identified by the content identification information included in the playlist information by using the established connection from the application server system to the user equipment.

According to this, it is possible to prevent that, even if a communication bandwidth necessary for transmitting each of plural content data varies depending on the content data, a communication bandwidth becomes insufficient when the respective content data are transmitted. As a result, it is possible to prevent that communication quality is lowered when plural content data are transmitted by using one connection (e.g., prevent that reproduction of content by user equipment is interrupted).

In this case, it is preferred that:
the application server system includes the maximum communication bandwidth acquiring means, and also includes a maximum communication bandwidth information transmitting means for transmitting maximum communication bandwidth information showing the acquired maximum communication bandwidth to the connection control system;
the connection control system includes the connection establishing means; and
the connection establishing means is configured to receive the maximum communication bandwidth information from the application server system, and establish the connection based on a maximum communication bandwidth shown by the received maximum communication bandwidth information.

In this case, it is preferred that:
the content delivery system includes a code rate storing means for storing the content identification information in relation to a code rate, which is a data amount for reproducing content shown by content data identified by the content identification information based on the content data for a unit time; and
the maximum communication bandwidth acquiring means is configured to acquire the code rate stored in relation to the content identification information included in the playlist information as the communication bandwidth necessary for transmitting content data identified by the content identification information.

In a case that content is reproduced at a constant speed based on content data received by the user equipment, a code rate is substantially equal to a communication bandwidth used for transmitting the content data. Moreover, content is usually reproduced at a constant speed. Therefore, by configuring the content delivery system as described above, it is possible to make an acquired maximum communication bandwidth sufficiently close to the maximum value of a communication bandwidth used at the time of actual transmission of plural content data. As a result, it is possible to prevent decrease of communication quality at the time of transmission of plural content data.

In this case, it is preferred that:
the user equipment includes a content request transmitting means for transmitting a content transmission request including content identification information for identifying content to the application server system; and
the application server system includes:
   a content request receiving means for receiving the content transmission request from the user equipment; and
   a playlist information generating means for generating the playlist information by adding other content identification information to content identification information included in the received content transmission request.

According to this, for example, the application server system can transmit data showing content in which other content (e.g., advertisement content) is inserted into content that the user wishes to view (wish-to-view content), to the user equipment. As a result, it is possible to have the user view the content that the other content is inserted into the wish-to-view content.

Further, in another aspect of the content delivery system, it is preferred that:
the user equipment includes a playlist information transmitting means for transmitting the playlist information to the application server system; and
the application server system includes a playlist information receiving means for receiving the playlist information from the user equipment.

According to this, in a case that the user wishes to view a plurality of contents, the user can view the plurality of contents all at once.

In this case, it is preferred that:
the maximum communication bandwidth acquiring means is configured to, when the playlist information is changed in a state that a connection between the application server system and the user equipment is established, acquire the maximum communication bandwidth based on the playlist information after changed;
the connection establishing means is configured to, when the maximum communication bandwidth is acquired based on the playlist information after changed, reestablish the established connection so as to have the acquired maximum communication bandwidth; and
the content transmitting means is configured to transmit content data based on the playlist information after changed to the user equipment by using the established connection.

There is a case that a maximum communication bandwidth increases due to change of playlist information. Even in this case, according to the configuration described above, it is possible to reestablish a connection having the maximum communication bandwidth. Therefore, it is possible to prevent decrease of communication quality at the time of transmission of content data included in the playlist information after changed.

In this case, it is preferred that:
the content delivery system includes a playlist information changing means for, when a subsequent viewing request of requesting that second user equipment subsequently receives content data having been received by first user equipment based on the playlist information is accepted, changing the playlist information based on equipment attribute information showing an attribute of the second user equipment;
the maximum communication bandwidth acquiring means is configured to, when the playlist information is changed by the playlist information changing means, acquire the maximum communication bandwidth based on the playlist information after changed;
the connection establishing means is configured to, when the maximum communication bandwidth is acquired based on the playlist information after changed, establish a connection having the acquired maximum communication bandwidth between the application server system and the second user equipment; and
the content transmitting means is configured to transmit content data based on the playlist information after changed to the second user equipment by using the established connection.

There is a case that the user viewing content by using the first user equipment wishes to subsequently view the content by using the second user equipment. In this case, there may be a difference of the resolution of a display, a maximum communication speed and/or the like between the first user equipment and the second user equipment. Moreover, as advertisement content added by the application server system to the wish-to-view content, different advertisement contents between the first user equipment and the second user equipment may be used.

Even in this case, according to the configuration described above, the content delivery system changes playlist information based on equipment attribute information, establishes a connection having a communication bandwidth corresponding to the playlist information after changed, and transmits content data to the second user equipment by using the connection. Therefore, it is possible to prevent decrease of communication quality at the time of transmission of the content data based on the playlist information after changed. As a result, by using the second user equipment, the user can subsequently view the content that the user has viewed by using the first user equipment.

In this case, it is preferred that the content delivery system includes a transmission-impossible information outputting means for, when the application server system cannot transmit the content data identified by the content identification information included in the playlist information, outputting transmission-impossible information showing that.

According to this, for example, in a case that the application server system cannot transmit content data identified by content identification information included in playlist information, it is possible to change the playlist information. Moreover, it is possible to notify the user that it is impossible to transmit the content data.

In this case, it is preferred that:
the playlist information includes information showing an order of outputting the content; and
the content transmitting means is configured to transmit the content data in the order shown by the playlist information.

In this case, it is preferred that:
the user equipment is configured to transmit equipment specification information for specifying the user equipment to the connection control system; and
the connection establishing means is configured to receive the equipment specification information from the user equipment, and establish the connection between the application server system and the user equipment based on the received equipment specification information.

In this case, it is preferred that the maximum communication bandwidth information transmitting means is configured to, when the connection control system executes a process for establishing the connection, transmit the maximum communication bandwidth information to the connection control system.

In a case that the application server system is configured to transmit maximum communication bandwidth information to the connection control system before the connection control system executes a process for establishing a connection, when playlist information is changed after transmission of the maximum communication bandwidth information, it is impossible to reflect the playlist information after changed on the maximum communication information received by the connection control system.

In contrast, according to the configuration described above, the application server system can transmit maximum communication bandwidth information on which latest playlist information at a moment that the connection control system executes a process for establishing a connection is reflected, to the connection control system.

In this case, it is preferred that:
the connection establishing means is configured to establish the connection by transmitting a predetermined connection establishing message and receiving a predetermined connection establishing message to and from the user equipment and the application server system, respectively; and
the maximum communication bandwidth information transmitting means is configured to, by including the maximum communication bandwidth information into the connection establishing message, transmit the maximum communication bandwidth information to the connection control system.

According to this, for the purpose of transmitting maximum communication bandwidth information to the connection control system, the application server system does not need to additionally transmit a message other than a connection establishing message. That is to say, it is possible to decrease the number of times of communication between the connection control system and the application server system. In other words, it is possible to reduce the process load and/or communication load for the connection control system and the application server system to transmit and receive messages.

Further, a content delivery system of another exemplary embodiment of the present invention includes an application server system and a connection control system.

Furthermore, the connection control system includes:
a Core IMS (Internet Protocol Multimedia Subsystem) part configured to control a connection between the application server system and user equipment; and
a transport functions part configured to execute a band securing process of securing a communication band of a predetermined communication bandwidth in a communication path between the application server system and the user equipment.

In addition, the application server system includes:
a media functions part configured to transmit content data showing content to the user equipment; and
a service control functions part configured to control a service provided by the media functions part.

Furthermore, the media functions part includes a maximum communication bandwidth acquiring means for acquiring a maximum value of a communication bandwidth necessary for transmitting content data identified by content identification information included in playlist information including plural pieces of content identification information for identifying content, as a maximum communication bandwidth.

In addition, the Core IMS part and the transport functions part include a connection establishing means for establishing a connection that is via the Core IMS part between the application server system and the user equipment and that has the acquired maximum communication bandwidth.

In addition, the media functions part further includes a content transmitting means for transmitting content data identified by the content identification information included in the playlist information by using the established connection to the user equipment.

In this case, it is preferred that:
the media functions part includes a maximum communication bandwidth information transmitting means for transmitting maximum communication bandwidth information showing the acquired maximum communication bandwidth to the Core IMS part; and
the connection establishing means is configured to receive the maximum communication bandwidth information from the media functions part, and establish the connection based on the maximum communication bandwidth shown by the received maximum communication bandwidth information.

In this case, it is preferred that:
the media functions part includes a code rate storing means for storing the content identification information in relation to a code rate, which is a data amount for reproducing content shown by content data identified by the content identification information based on the content data for a unit time; and
the maximum communication bandwidth acquiring means is configured to acquire the code rate stored in relation to the content identification information included in the playlist information as the communication bandwidth necessary for transmitting content data identified by the content identification information.

In this case, it is preferred that:
the user equipment includes a content request transmitting means for transmitting a content transmission request including content identification information for identifying content to the service control functions part via the Core IMS part;
the service control functions part includes:
   a content request receiving means for receiving the content transmission request from the user equipment;
   a playlist information generating means for generating the playlist information by adding other content identification information to content identification information included in the received content transmission request; and
   a playlist information transmitting means for transmitting the generated playlist information to the media functions part; and
   the media functions part includes a playlist information receiving means for receiving the playlist information from the service control functions part.

Further, in another aspect of the content delivery system, it is preferred that:
the user equipment includes a playlist information transmitting means for transmitting the playlist information to the media functions part via the Core IMS part; and
the media functions part includes a playlist information receiving means for receiving the playlist information from the user equipment.

Further, a content delivery method of another exemplary embodiment of the present invention is a method of transmitting content data showing content from an application server system to user equipment via a connection control system.

Furthermore, this content delivery method is a method including:
acquiring a maximum value of a communication bandwidth necessary for transmitting content data identified by content identification information included in playlist information including plural pieces of content identification information for identifying content, as a maximum communication bandwidth;
establishing a connection having the acquired maximum communication bandwidth between the application server system and the user equipment; and
transmitting the content data identified by the content identification information included in the playlist information by using the established connection to the user equipment, by the application server system.

In this case, it is preferred that the content delivery method includes:
acquiring the maximum communication bandwidth and transmitting maximum communication bandwidth information showing the acquired maximum communication bandwidth to the connection control system, by the application server system; and
receiving the maximum communication bandwidth information from the application server system and establishing the connection based on a maximum communication bandwidth shown by the received maximum communication bandwidth information, by the connection control system.

In this case, it is preferred that the content delivery method includes acquiring a code rate that is a data amount for reproducing content shown by content data based on the content data for a unit time and that is stored in a storage device in relation to the content identification information included in the playlist information, as the communication bandwidth necessary for transmitting content data identified by the content identification information.

In this case, it is preferred that the content delivery method includes:
transmitting a content transmission request including content identification information for identifying content to the application server system, by the user equipment; and
receiving the content transmission request from the user equipment and generating the playlist information by adding other content identification information to content identification information included in the received content transmission request, by the application server system.

Further, it is preferred that a content delivery method in another aspect of the present invention includes:
transmitting the playlist information to the application server system, by the user equipment; and
receiving the playlist information from the user equipment, by the application server system.

Further, a media server of another exemplary embodiment of the present invention includes:
a maximum communication bandwidth acquiring means for acquiring a maximum value of a communication bandwidth necessary for transmitting content data identified by content identification information included in playlist information including plural pieces of content identification information for identifying content, as a maximum communication bandwidth; and
a content transmitting means for transmitting the content data identified by the content identification information included in the playlist information to user equipment by using a connection established based on the acquired maximum communication bandwidth.

In this case, it is preferred that the media server includes a maximum communication bandwidth information transmitting means for transmitting maximum communication bandwidth information showing the acquired maximum communication bandwidth to a connection control system establishing a connection between the media server and the user equipment.

In this case, it is preferred that:
the media server includes a code rate storing means for storing the content identification information in relation to a code rate, which is a data amount for reproducing content shown by content data identified by the content identification information based on the content data for a unit time; and
the maximum communication bandwidth acquiring means is configured to acquire the code rate stored in relation to the content identification information included in the playlist information, as the communication bandwidth necessary for transmitting the content data identified by the content identification information.

Further, a program of another exemplary embodiment of the present invention is a program for causing a media server to realize:
a maximum communication bandwidth acquiring means for acquiring a maximum value of a communication bandwidth necessary for transmitting content data identified by content identification information included in playlist information including plural pieces of content identification information for identifying content, as a maximum communication bandwidth; and
a content transmitting means for transmitting the content data identified by the content identification information included in the playlist information to user equipment by using a connection established based on the acquired maximum communication bandwidth.

In this case, it is preferred that the program is a program for causing the media server to further realize a maximum communication bandwidth information transmitting means for transmitting maximum communication bandwidth information showing the acquired maximum communication bandwidth to a connection control system establishing a connection between the media server and the user equipment.

In this case, it is preferred that the maximum communication bandwidth acquiring means is configured to acquire a code rate that is a data amount for reproducing content shown by content data based on the content data for a unit time and that is stored in a storage device in relation to the content identification information included in the playlist information, as the communication bandwidth necessary for transmitting the content data identified by the content identification information.

Further, a service control server of another exemplary embodiment of the present invention includes:
a content request receiving means for receiving a content transmission request including content identification information for identifying content from user equipment;
a playlist information generating means for generating playlist information by adding other content identification information to the content identification information included in the received content transmission request; and
a playlist information transmitting means for transmitting the generated playlist information to a media server.

Further, a program of another exemplary embodiment of the present invention is a program for causing a service control server to realize:
a content request receiving means for receiving a content transmission request including content identification information for identifying content from user equipment;
a playlist information generating means for generating playlist information by adding other content identification information to the content identification information included in the received content transmission request; and
a playlist information transmitting means for transmitting the generated playlist information to a media server.

The inventions of a content delivery method, a media server, a program or a service control server having the aforementioned configurations have actions similar to those the content delivery system does, and therefore, can achieve the aforementioned object of the present invention.

Although the present invention has been described above with reference to the exemplary embodiments, the present invention is not limited to the abovementioned exemplary embodiments. The configuration and details of the present invention can be altered in various manners that can be understood by those skilled in the art within the scope of the present invention.

For example, the content delivery systems 1 according to the respective exemplary embodiments described above are configured to generate playlist information by adding advertisement content identification information to main content identification information included in a content transmission request. The content delivery systems 1 according to the respective exemplary embodiments may be configured to generate playlist information by adding other main content identification information to main content identification information included in a content transmission request.

For example, the content delivery system 1 may be configured to add content identification information of content having a high relation with content identified by main content identification information included in a content transmission request.

Furthermore, the content delivery system 1 may be configured to, in a case that the user of the user equipment 2 input information for specifying the genre of content, generate playlist information based on plural pieces of content identification information extracted based on the inputted information.

Further, the content delivery systems 1 according to the respective exemplary embodiments use a code rate of the content data, as a communication bandwidth used for transmitting the content data. The content delivery systems 1 according to the respective exemplary embodiments may be configured to use a value obtained by adding a communication bandwidth used for controlling transmission of content data to a code rate, as a communication bandwidth used for transmitting the content data.

Furthermore, in the content delivery system 1 according to each of the exemplary embodiments, the media functions part 60 is equipped with the maximum communication band width acquisition part, but the service control part 40 and/or the media equipment 2 may be equipped with the maximum communication bandwidth acquisition part.

Further, the respective exemplary embodiments are configured so that the user profile server functions part 50 includes the user basic information storage part 51, but may be configured so that, instead of the user profile server functions part 50, the service control functions part 40 includes the user basic information storage part 51. That is to say, the service control functions part 40 may store user basic information in relation to user identification information.

Further, in the respective exemplary embodiments, content element information included in playlist information is formed by a combination of content identification information and a reproduction start position and reproduction time of content identified by the content identification information, but may be formed by only content identification information.

Further, a modified example of each of the exemplary embodiments may be equipped with, instead of the service control server 4a and the media server 4b, a server having both the functions of the service control server 4a and the media server 4b.
Further, a modified example of each of the exemplary embodiments may be equipped with, instead of the service control server 4a and the user information management server 4c, a server having both the functions of the service control server 4a and the user information management server 4c.

Further, the media server 4b has all of the media functions part 60 in the respective exemplary embodiments described above, but it is possible to configure so that a first server has part (a media control functions part) of the media functions part 60 and a second server has the remaining part (a media delivery functions part) of the media functions part 60.
Further, a modified example of each of the exemplary embodiments may be equipped with a plurality of servers having the media delivery function part of the media functions part 60.

Further, the connection control system 3 includes a plurality of connection control servers (the connection control servers 3a, 3b and the like) in the modified example of each of the exemplary embodiments, but may include only one connection control server.

Further, in each of the exemplary embodiments, the content delivery system 1 is configured to transmit playlist information and maximum communication bandwidth information in accordance with SIP, but may be configured to transmit in accordance with another communication protocol (e.g., RTSP).

In the respective exemplary embodiments, the user equipment 2 is a set top box, but may be a mobile phone device, a PDA (Personal Data Assistance), a smartphone, a PHS (Personal Handyphone System), a game machine, a car navigation system, a personal computer, or the like.
Further, in the respective exemplary embodiments, content is a moving image, but may be only images or only sounds.

Further, in each of the exemplary embodiments, components of the content delivery system 1 are expressed as components configuring IMS (IP Multimedia Subsystem), but may be expressed as components configuring MMS (Multimedia Messaging Service).

The respective functions of the content delivery system 1 in each of the exemplary embodiments are realized by execution of a program (software) by the CPU, but may be realized by hardware such as circuits.

Further, in each of the exemplary embodiments, the program is stored by the storage device, but may be stored by a computer-readable recording medium. For example, the recording medium is a portable medium such as a flexible disk, an optical disk, a magneto-optical disk and a semiconductor memory.

Further, as another modified example of the exemplary embodiment, any combination of the exemplary embodiments and modified examples may be employed.

The present invention is based upon and claims the benefit of priority from Japanese patent application No. 2009-186119, filed on August 10, 2009, the disclosure of which is incorporated herein in its entirety by reference.

### INDUSTRIAL APPLICABILITY

The present invention can be applied to a Video on Demand system that delivers content via an IP network, an IPTV system that broadcasts on television via an IP network, and the like.

### DESCRIPTION OF NUMERALS

- 1: content delivery system
- 2, 2a, 2b: user equipment
- 3: connection control system
- 3a, 3b: connection control server
- 4: application server system
- 4a: service control server
- 4b: media server
- 4c: user information management server
- 11: request transmission part
- 12: playlist generation part
- 30: Core IMS part
- 31: call connection control part
- 32: IMS authentication part
- 40: service control functions part
- 41: information transceiver part
- 42: advertisement attribute information storage part
- 43: advertisement insertion information storage part
- 44: playlist generation part
- 45: delivery request part
- 50: user profile server functions part
- 51: user basic information storage part
- 60: media functions part
- 61: information transceiver part
- 62: content data storage part
- 63: content delivery control part
- 64: content generation part
- 65: content delivery part
- 66: transmission-impossible information output part
- 67: maximum communication bandwidth acquisition part
- 80: transport functions part
- 81: band securing part
- 82: equipment authentication part
- 101: maximum communication bandwidth acquisition part
- 102: connection establishment part
- 103: content transmission part
- NW1: user-side communication line
- NW2: service-provider-side communication line

## Claims

1. A content delivery system including an application server system and a connection control system, the content delivery system comprising:
a maximum communication bandwidth acquiring means for acquiring a maximum value of a communication bandwidth necessary for transmitting content data identified by content identification information included in playlist information including plural pieces of content identification information for identifying content, as a maximum communication bandwidth;
a connection establishing means for establishing a connection having the acquired maximum communication bandwidth between the application server system and user equipment; and
a content transmitting means for transmitting the content data identified by the content identification information included in the playlist information by using the established connection from the application server system to the user equipment.

2. The content delivery system according to Claim 1, wherein:
the application server system includes the maximum communication bandwidth acquiring means, and also includes a maximum communication bandwidth information transmitting means for transmitting maximum communication bandwidth information showing the acquired maximum communication bandwidth to the connection control system;
the connection control system includes the connection establishing means; and
the connection establishing means is configured to receive the maximum communication bandwidth information from the application server system, and establish the connection based on a maximum communication bandwidth shown by the received maximum communication bandwidth information.

3. The content delivery system according to Claim 1 or 2, comprising a code rate storing means for storing the content identification information in relation to a code rate, which is a data amount for reproducing content shown by content data identified by the content identification information based on the content data for a unit time,
wherein the maximum communication bandwidth acquiring means is configured to acquire the code rate stored in relation to the content identification information included in the playlist information as the communication bandwidth necessary for transmitting content data identified by the content identification information.

4. The content delivery system according to Claim 2 or 3, wherein:
the user equipment includes a content request transmitting means for transmitting a content transmission request including content identification information for identifying content to the application server system; and
the application server system includes:
a content request receiving means for receiving the content transmission request from the user equipment; and
a playlist information generating means for generating the playlist information by adding other content identification information to content identification information included in the received content transmission request.

5. The content delivery system according to Claim 2 or 3, wherein:
the user equipment includes a playlist information transmitting means for transmitting the playlist information to the application server system; and
the application server system includes a playlist information receiving means for receiving the playlist information from the user equipment.

6. The content delivery system according to any of Claims 1 to 5, wherein:
the maximum communication bandwidth acquiring means is configured to, when the playlist information is changed in a state that a connection between the application server system and the user equipment is established, acquire the maximum communication bandwidth based on the playlist information after changed;
the connection establishing means is configured to, when the maximum communication bandwidth is acquired based on the playlist information after changed, reestablish the established connection so as to have the acquired maximum communication bandwidth; and
the content transmitting means is configured to transmit content data based on the playlist information after changed to the user equipment by using the established connection.

7. The content delivery system according to any of Claims 1 to 6, comprising a playlist information changing means for, when a subsequent viewing request of requesting that second user equipment subsequently receives content data having been received by first user equipment based on the playlist information is accepted, changing the playlist information based on equipment attribute information showing an attribute of the second user equipment, wherein:
the maximum communication bandwidth acquiring means is configured to, when the playlist information is changed by the playlist information changing means, acquire the maximum communication bandwidth based on the playlist information after changed;
the connection establishing means is configured to, when the maximum communication bandwidth is acquired based on the playlist information after changed, establish a connection having the acquired maximum communication bandwidth between the application server system and the second user equipment; and
the content transmitting means is configured to transmit content data based on the playlist information after changed to the second user equipment by using the established connection.

8. The content delivery system according to any of Claims 1 to 7, comprising a transmission-impossible information outputting means for, when the application server system cannot transmit the content data identified by the content identification information included in the playlist information, outputting transmission-impossible information showing that.

9. The content delivery system according to any of Claims 1 to 8, wherein:
the playlist information includes information showing an order of outputting the content; and
the content transmitting means is configured to transmit the content data in the order shown by the playlist information.

10. The content delivery system according to any of Claims 2 to 9, wherein:
the user equipment is configured to transmit equipment specification information for specifying the user equipment to the connection control system; and
the connection establishing means is configured to receive the equipment specification information from the user equipment, and establish the connection between the application server system and the user equipment based on the received equipment specification information.

11. The content delivery system according to any of Claims 2 to 10, wherein the maximum communication bandwidth information transmitting means is configured to, when the connection control system executes a process for establishing the connection, transmit the maximum communication bandwidth information to the connection control system.

12. The content delivery system according to Claim 11, wherein:
the connection establishing means is configured to establish the connection by transmitting a predetermined connection establishing message and receiving a predetermined connection establishing message to and from the user equipment and the application server system, respectively; and
the maximum communication bandwidth information transmitting means is configured to, by including the maximum communication bandwidth information into the connection establishing message, transmit the maximum communication bandwidth information to the connection control system.

13. A content delivery system including an application server system and a connection control system, wherein:
the connection control system includes:
a Core IMS (Internet Protocol Multimedia Subsystem) part configured to control a connection between the application server system and user equipment; and
a transport functions part configured to execute a band securing process of securing a communication band of a predetermined communication bandwidth in a communication path between the application server system and the user equipment;
the application server system includes:
a media functions part configured to transmit content data showing content to the user equipment; and
a service control functions part configured to control a service provided by the media functions part;
the media functions part includes a maximum communication bandwidth acquiring means for acquiring a maximum value of a communication bandwidth necessary for transmitting content data identified by content identification information included in playlist information including plural pieces of content identification information for identifying content, as a maximum communication bandwidth;
the Core IMS part and the transport functions part include a connection establishing means for establishing a connection that is via the Core IMS part between the application server system and the user equipment and that has the acquired maximum communication bandwidth; and
the media functions part further includes a content transmitting means for transmitting content data identified by the content identification information included in the playlist information by using the established connection to the user equipment.

14. The content delivery system according to Claim 13, wherein:
the media functions part includes a maximum communication bandwidth information transmitting means for transmitting maximum communication bandwidth information showing the acquired maximum communication bandwidth to the Core IMS part; and
the connection establishing means is configured to receive the maximum communication bandwidth information from the media functions part, and establish the connection based on the maximum communication bandwidth shown by the received maximum communication bandwidth information.

15. The content delivery system according to Claim 13 or 14, wherein:
the media functions part includes a code rate storing means for storing the content identification information in relation to a code rate, which is a data amount for reproducing content shown by content data identified by the content identification information based on the content data for a unit time; and
the maximum communication bandwidth acquiring means is configured to acquire the code rate stored in relation to the content identification information included in the playlist information as the communication bandwidth necessary for transmitting content data identified by the content identification information.

16. The content delivery system according to any of Claims 13 to 15, wherein:
the user equipment includes a content request transmitting means for transmitting a content transmission request including content identification information for identifying content to the service control functions part via the Core IMS part;
the service control functions part includes:
a content request receiving means for receiving the content transmission request from the user equipment;
a playlist information generating means for generating the playlist information by adding other content identification information to content identification information included in the received content transmission request; and
a playlist information transmitting means for transmitting the generated playlist information to the media functions part; and
the media functions part includes a playlist information receiving means for receiving the playlist information from the service control functions part.

17. The content delivery system according to any of Claims 13 to 15, wherein:
the user equipment includes a playlist information transmitting means for transmitting the playlist information to the media functions part via the Core IMS part; and
the media functions part includes a playlist information receiving means for receiving the playlist information from the user equipment.

18. A content delivery method of transmitting content data showing content from an application server system to user equipment via a connection control system, the content delivery method comprising:
acquiring a maximum value of a communication bandwidth necessary for transmitting content data identified by content identification information included in playlist information including plural pieces of content identification information for identifying content, as a maximum communication bandwidth;
establishing a connection having the acquired maximum communication bandwidth between the application server system and the user equipment; and
transmitting the content data identified by the content identification information included in the playlist information by using the established connection to the user equipment, by the application server system.

19. The content delivery method according to Claim 18, comprising;
acquiring the maximum communication bandwidth and transmitting maximum communication bandwidth information showing the acquired maximum communication bandwidth to the connection control system, by the application server system; and
receiving the maximum communication bandwidth information from the application server system and establishing the connection based on a maximum communication bandwidth shown by the received maximum communication bandwidth information, by the connection control system.

20. The content delivery method according to Claim 18 or 19, comprising
acquiring a code rate that is a data amount for reproducing content shown by content data based on the content data for a unit time and that is stored in a storage device in relation to the content identification information included in the playlist information, as the communication bandwidth necessary for transmitting content data identified by the content identification information.

21. The content delivery method according to Claim 19 or 20, comprising:
transmitting a content transmission request including content identification information for identifying content to the application server system, by the user equipment; and
receiving the content transmission request from the user equipment and generating the playlist information by adding other content identification information to content identification information included in the received content transmission request, by the application server system.

22. The content delivery method according to Claim 19 or 20, comprising;
transmitting the playlist information to the application server system, by the user equipment; and
receiving the playlist information from the user equipment, by the application server system.

23. A media server, comprising:
a maximum communication bandwidth acquiring means for acquiring a maximum value of a communication bandwidth necessary for transmitting content data identified by content identification information included in playlist information including plural pieces of content identification information for identifying content, as a maximum communication bandwidth; and
a content transmitting means for transmitting the content data identified by the content identification information included in the playlist information to user equipment by using a connection established based on the acquired maximum communication bandwidth.

24. The media server according to Claim 23, comprising a maximum communication bandwidth information transmitting means for transmitting maximum communication bandwidth information showing the acquired maximum communication bandwidth to a connection control system establishing a connection between the media server and the user equipment.

25. The media server according to Claim 23 or 24, comprising a code rate storing means for storing the content identification information in relation to a code rate, which is a data amount for reproducing content shown by content data identified by the content identification information based on the content data for a unit time,
wherein the maximum communication bandwidth acquiring means is configured to acquire the code rate stored in relation to the content identification information included in the playlist information, as the communication bandwidth necessary for transmitting the content data identified by the content identification information.

26. A program for causing a media server to realize:
a maximum communication bandwidth acquiring means for acquiring a maximum value of a communication bandwidth necessary for transmitting content data identified by content identification information included in playlist information including plural pieces of content identification information for identifying content, as a maximum communication bandwidth; and
a content transmitting means for transmitting the content data identified by the content identification information included in the playlist information to user equipment by using a connection established based on the acquired maximum communication bandwidth.

27. The program according to Claim 26 for causing the media server to further realize a maximum communication bandwidth information transmitting means for transmitting maximum communication bandwidth information showing the acquired maximum communication bandwidth to a connection control system establishing a connection between the media server and the user equipment.

28. The program according to Claim 26 or 27, wherein the maximum communication bandwidth acquiring means is configured to acquire a code rate that is a data amount for reproducing content shown by content data based on the content data for a unit time and that is stored in a storage device in relation to the content identification information included in the playlist information, as the communication bandwidth necessary for transmitting the content data identified by the content identification information.

29. A service control server, comprising:
a content request receiving means for receiving a content transmission request including content identification information for identifying content from user equipment;
a playlist information generating means for generating playlist information by adding other content identification information to the content identification information included in the received content transmission request; and
a playlist information transmitting means for transmitting the generated playlist information to a media server.

30. A program for causing a service control server to realize:
a content request receiving means for receiving a content transmission request including content identification information for identifying content from user equipment;
a playlist information generating means for generating playlist information by adding other content identification information to the content identification information included in the received content transmission request; and
a playlist information transmitting means for transmitting the generated playlist information to a media server.
